# EUROPÄISCHE PATENTSCHRIFT

(11) **EP 3 150 924 B1**
(45) Veröffentlichungstag und Bekanntmachung des Hinweises auf die Patenterteilung: **31.07.2019**
(21) Anmeldenummer: 15188146.3
(22) Anmeldetag: 02.10.2015
(51) Int. Cl.: F16K 41/10, F16K 41/12, F24D 3/10, F24D 19/10, F16K 11/048, F16K 1/12

(54) **HYDRAULISCHES SYSTEM**
HYDRAULIC SYSTEM
SYSTEME HYDRAULIQUE

(43) Veröffentlichungstag der Anmeldung: 05.04.2017
(73) Patentinhaber: Grundfos Holding A/S, 8850 Bjerringbro (DK)
(72) Erfinder: BLAD, Thomas, 8850 Bjerringbro (DK)
(74) Vertreter: Patentanwälte Vollmann Hemmer Lindfeld Partnerschaft mbB

(56) Entgegenhaltungen:
- EP-A1- 2 708 825
- DE-A1- 1 928 575

## Beschreibung

Die Erfindung betrifft ein Verfahren zum Umschalten einer Schalteinrichtung zwischen zwei Schaltstellungen in einem hydraulischen System, welches neben der Schalteinrichtung ein Pumpenaggregat aufweist. Ferner betrifft die Erfindung ein entsprechendes hydraulisches System, welches zur Ausführung dieses Verfahrens geeignet ist.

In hydraulischen Systemen werden verschiedenste Schalteinrichtungen verwendet, beispielsweise um Strömungswege zu schließen oder zwischen verschiedenen Strömungswegen umzuschalten. So ist es beispielsweise in hydraulischen Heizungssystemen, welche sowohl zur Erwärmung eines Gebäudes als auch zur Erwärmung von Brauchwasser verwendet werden bekannt, eine Schalteinrichtung in Form eines Umschaltventils zu verwenden, welche wahlweise den Heizmedium-Strom durch das Gebäude oder einen Wärmetauscher zur Erwärmung des Brauchwassers lenkt. Für derartige Schalteinrichtungen werden in der Regel separate Antriebe benötigt, was die Schalteinrichtungen relativ aufwendig im Aufbau und teuer macht.

Darüber hinaus sind Schalteinrichtungen wie Überdruckventile bekannt, welche durch Veränderung des Druckes schalten. Solche Schalteinrichtungen können jedoch beispielweise nicht zum Umschalten zwischen zwei Strömungswegen verwendet werden, da dann die Strömung durch den einen Strömungsweg nur mit geringerem Druck geführt werden könnte. Darüber hinaus sind Umschalteinrichtungen bekannt, welche durch Drehrichtungsumkehr eines Pumpenaggregates betätigt werden. Bei diesen Systemen ist nachteilig, dass der Wirkungsgrad des Pumpenaggregates nicht in beiden Drehrichtungen gleich ist und, dass das Ventil in der Nähe des Laufrades angeordnet sein muss.

DE 1 928 575 offenbart eine Heizungsanlage mit einem Mischventil, über welches einem Vorlauf kaltes Rücklaufwasser zugemischt wird. Dabei ist dieses Mischventil zur Veränderung des Mischungsverhältnisses einstellbar. Zur Einstellung ist ein druckabhängiger Antrieb vorgesehen, welcher durch den Ausgangsdruck eines Pumpenaggregates betätigt wird, sodass mit zunehmendem Druck die Zumischung von kaltem Rücklaufwasser verringert wird. Ein entsprechendes System ist aus US 3,897,903 bekannt. DE 1 928 575 offenbart den Oberbegriff des Anspruchs 1 und des Anspruchs 10.

Im Hinblick auf diese Problematik ist es Aufgabe der Erfindung, ein Verfahren zur Umschaltung einer Schalteinrichtung in einem hydraulischen System sowie ein entsprechendes hydraulisches System bereitzustellen, welche es bei hohem Wirkungsgrad auf einfache Weise ermöglichen, eine Schalteinrichtung zwischen zwei Schaltstellungen umzuschalten.

Diese Aufgabe wird gelöst durch ein Verfahren mit den in Anspruch 1 angegebenen Merkmalen sowie durch ein hydraulisches System mit den in Anspruch 10 angegebenen Merkmalen. Bevorzugte Ausführungsformen ergeben sich aus den Unteransprüchen, der nachfolgenden Beschreibung sowie den beigefügten Figuren. Dabei ist zu verstehen, dass die nachfolgend beschriebenen bevorzugten Ausgestaltungen unabhängig voneinander oder aber auch in Kombination verwirklicht werden können.

Das erfindungsgemäße Verfahren dient zum Umschalten einer Schalteinrichtung zwischen zwei Schaltstellungen, wobei die Schalteinrichtung in einem hydraulischen System angeordnet ist, welches neben der Schalteinrichtung ein Pumpenaggregat aufweist. Erfindungsgemäß wird das Pumpenaggregat dazu genutzt, die Schalteinrichtung dazu zu veranlassen, zwischen den Schaltstellungen umzuschalten. Dazu ist vorzugsweise eine rein hydraulische Kopplung des Pumpenaggregates mit der Schalteinrichtung über das hydraulische System selber, das heißt über die in dem hydraulischen System geförderte Flüssigkeit vorgesehen. Das heißt es werden keine separaten Steuer- bzw. Signalverbindungen zwischen dem Pumpenaggregat und der Schalteinrichtung benötigt. Die Schalteinrichtung kann beispielsweise ein oder mehrere bewegliche Schaltelemente aufweisen, welche zwischen verschiedenen Stellungen, insbesondere zwischen zumindest zwei möglichen Schaltstellungen bewegt werden können.

Das Pumpenaggregat weist erfindungsgemäß zumindest zwei verschiedene Betriebszustände auf. Dazu ist das Pumpenaggregat vorzugsweise mit einer Steuereinrichtung versehen, welche diese zwei Betriebszustände einstellen kann. Das Pumpenaggregat kann bevorzugt ein Umwälzpumpenaggregat mit einem elektronisch angesteuerten Antriebsmotor, insbesondere ein über einen Frequenzumrichter angesteuerten Antriebsmotor sein, wobei die Steuereinrichtung den Antriebsmotor ansteuert. Wie beschrieben wird ein Umschalten der Schalteinrichtung erfindungsgemäß von dem Pumpenaggregat über das hydraulische System selber veranlasst. Erfindungsgemäß ist dabei vorgesehen, dass die Schaltstellungen der Schalteinrichtung abhängig von einer Verweildauer des Pumpenaggregates in zumindest einem der beiden Betriebszustände erreicht werden. Das bedeutet beispielsweise, dass das Pumpenaggregat, wenn es für eine längere Zeitspanne in einem zweiten Betriebszustand verbleibt, in die eine Schaltstellung schaltet und, wenn es für eine kürzere Zeitspanne in diesem zweiten Betriebszustand verbleibt, in den anderen Schaltzustand bzw. die andere Schaltstellung schaltet oder in dieser Schaltstellung verbleibt. Vorzugsweise ist eine in der Steuereinrichtung hinterlegte vordefinierte Zeitspanne für den Betrieb in dem jeweiligen Betriebszustand, welche zum Umschalten erforderlich ist, definiert. Das bedeutet, wenn die Betriebsdauer in dem Betriebszustand kürzer als die Zeitspanne ist, wird die eine Schaltstellung erreicht, wenn die Betriebsdauer länger als die Zeitspanne ist, wird die andere Schaltstellung erreicht.

Besonders bevorzugt sind zwei verschiedene Betriebszustände vorgesehen, wobei ein erster Betriebszustand derjenige Betriebszustand ist, in dem das Pumpenaggregat im normalen Betrieb des hydraulischen Systems betrieben wird. Zum Umschalten der Schalteinrichtung kann dann das Pumpenaggregat in einen zweiten Betriebszustand versetzt werden, wobei abhängig von der Zeitspanne, in welcher das Pumpenaggregat in dem zweiten Betriebszustand verweilt, die Schalteinrichtung in der gewünschten Weise umgeschaltet wird. Insbesondere kann das Verfahren so ausgestaltet sein, dass die Schalteinrichtung bei einer bestimmten Verweildauer umschaltet und bei einer anderen Verweildauer nicht umschaltet oder umschaltet und wieder zurück in die erste Schaltstellung schaltet. So kann abhängig von der Verweildauer in dem zweiten Betriebszustand eine gewünschte Schaltstellung der Schalteinrichtung erreicht werden.

Gemäß einer bevorzugten Ausführungsform des erfindungsgemäßen Verfahrens ist bei Betrieb des Pumpenaggregates in einem ersten Betriebszustand die Schalteinrichtung in jeder der beiden Schaltstellungen selbsthaltend. Bevorzugt wird die Schalteinrichtung in dem ersten Betriebszustand durch einen von dem Pumpenaggregat erzeugten hydraulischen Druck in der jeweiligen Schaltstellung gehalten. Zum Umschalten zwischen den Schaltstellungen der Schalteinrichtung wird das Pumpenaggregat aus dem ersten Betriebszustand in einen zweiten Betriebszustand versetzt, wobei in diesem zweiten Betriebszustand die Selbsthaltefunktion aufgehoben ist. Dies kann insbesondere durch Verringerung des hydraulischen Druckes in dem System geschehen. Die Schalteinrichtung wird in diesem zweiten Betriebszustand des Pumpenaggregates zwischen den beiden Schaltstellungen hin- und her geschaltet. Zum Halten einer gewünschten Schaltstellung wird das Pumpenaggregat genau dann, wenn die gewünschte Schaltstellung erreicht ist, wieder in den ersten Betriebszustand versetzt, in welchem dann die Schaltstellung wieder selbsttätig, beispielsweise durch den hydraulischen Druck gehalten wird. Das bedeutet, abhängig davon, wie lange das Pumpenaggregat in dem zweiten Betriebszustand betrieben wird, wird das Pumpenaggregat in einer der beiden möglichen Schaltstellungen der Schalteinrichtung wieder in den ersten Betriebszustand versetzt, so dass die Schalteinrichtung genau in diese Schaltstellung geschaltet wird und dann wieder gehalten wird.

Besonders bevorzugt wird das Pumpenaggregat in dem ersten Betriebszustand mit einer höheren Drehzahl betrieben als in dem zweiten Betriebszustand. Dadurch wird in dem ersten Betriebszustand in dem hydraulischen System ein höherer hydraulischer Druck erzeugt als in dem zweiten Betriebszustand. Weiter bevorzugt ist in dem ersten Betriebszustand die Drehzahl größer als eine vorbestimmte Grenzdrehzahl und in dem zweiten Betriebszustand die Drehzahl kleiner oder gleich der Grenzdrehzahl. Alternativ kann das Pumpenaggregat in dem zweiten Betriebszustand ausgeschaltet sein, das heißt stillstehen. Eine solche Grenzdrehzahl kann in der Steuereinrichtung hinterlegt sein. Dabei wird die Grenzdrehzahl so gewählt, dass oberhalb der Grenzdrehzahl die gewünschte Selbsthaltelfunktion gegeben ist und unterhalb oder bei der Grenzdrehzahl diese Selbsthaltefunktion nicht mehr gegeben ist, um das Hin- und Her- Schalten der Schalteinrichtung bzw. ein Umschalten der Schalteinrichtung zu ermöglichen.

Weiter ist vorzugsweise vorgesehen, dass bei Betrieb des Pumpenaggregates in dem zweiten Betriebszustand und/oder bei Stillstand des Pumpenaggregates die Schalteinrichtung in eine definierte Ausgangslage bewegt und dort gehalten wird. Dies kann durch ein Rückstellelement wie eine Rückstellfeder bewirkt werden.

Wenn die Schalteinrichtung zwischen den beiden Schaltstellungen hin- und her schaltet, nimmt die Schalteinrichtung vorzugsweise zumindest jede der beiden Schaltstellungen einmal ein. So ist es durch Umschalten des Pumpenaggregates in den ersten Betriebszustand möglich, die gewünschte der beiden Schaltstellungen zu wählen, je nach dem zu welchem Zeitpunkt das Pumpenaggregat in den ersten Betriebszustand geschaltet wird. Bevorzugt sind einer Steuereinrichtung die Zeitdauern für das Hin- und Her- Schalten bekannt, so dass der Zeitpunkt zum Umschalten des Pumpenaggregates in den ersten Betriebszustand genau definiert werden kann.

Besonders bevorzugt wird das Hin- und Her- Schalten der Schalteinrichtung mit Hilfe von Energie bewirkt, welche zuvor bei Betrieb des Pumpenaggregates in dem ersten Betriebszustand in zumindest einem Energiespeicher und/oder in dem hydraulischen System selber gespeichert worden ist und/oder von dem Pumpenaggregat in den zweiten Betriebszustand an das hydraulische System abgegeben wird. So kann auf einen separaten Antrieb der Schalteinrichtung zum Bewegen eines Schaltelementes der Schalteinrichtung verzichtet werden. Stattdessen wird die Bewegung bevorzugt durch hydraulische Energie aus dem hydraulischen System selber veranlasst. Besonders bevorzugt wird die dafür erforderliche Schaltenergie während des ersten Betriebszustandes gespeichert und dann in dem zweiten Betriebszustand des Pumpenaggregates ausgenutzt, um das Umschalten bzw. Hin- und Her- Bewegungen zu bewirken.

Ein Energiespeicher kann beispielsweise als Federspeicher ausgebildet sein. In dem hydraulischen System selber kann Energie beispielsweise als Strömungsenergie der im System strömenden Flüssigkeit gespeichert werden. Die Flüssigkeit weist bei ihrer Bewegung eine gewisse Trägheit auf und hat somit beim Umschalten in den zweiten Betriebszustand des Pumpenaggregates noch eine gewisse Energie, welche sie in dem ersten Betriebszustand aufgenommen hat. Insbesondere verringert sich bei Verringerung der Drehzahl der Druck im System schneller als die Strömungsenergie. Wenn daher der Druck zum Halten der Schalteinrichtung in einer bestimmten Schaltstellung ausgenutzt wird, kann dieser Druck zum Aufheben der Haltefunktion sehr schnell verringert werden, während im System noch ausreichend Strömungsenergie vorhanden ist, um das Umschalten der Schalteinrichtung bewirken zu können.

Gemäß einer weiteren bevorzugten Ausführungsform wird eine Bewegung zwischen den beiden Schaltstellungen der Schalteinrichtung bzw. eines Schaltelementes der Schalteinrichtung bei dem Hin- und Her- Schalten über zumindest ein Dämpfungselement und/oder eine zurückzulegende Weglänge verzögert. Dies ermöglicht es das Hin- und Her- Schalten derart zu verzögern, dass ausreichend Zeit verbleibt, das Pumpenaggregat genau in einer bestimmten Schaltstellung, das heißt zu einem bestimmten Zeitpunkt in den ersten Betriebszustand zu versetzen, um die Schalteinrichtung in der gewünschten Schaltstellung zu halten.

In einer weiter bevorzugten Ausgestaltung des Verfahrens ist die Schalteinrichtung eine Umschalteinrichtung, welche zwischen zwei Strömungswegen für eine von den Pumpenaggregat erzeugte Strömung umschaltet, wobei vorzugsweise ein von dem Pumpenaggregat in dem gerade verschlossenen Strömungsweg erzeugter hydraulischer Druck dazu benutzt wird, die Schalteinrichtung in ihrer eingenommenen Schaltstellung zu halten, solange das Pumpenaggregat in seinem ersten Betriebszustand betrieben wird. Dazu ist vorzugsweise die Schalteinrichtung so ausgebildet, dass ihr Schaltelement zum Öffnen des Strömungsweges gegen den genannten hydraulischen Druck bewegt werden muss. So wird eine Selbsthaltefunktion geschaffen.

Gegenstand der Erfindung ist neben dem vorangehend beschriebenen Verfahren ein hydraulisches System mit zumindest einem Pumpenaggregat und einer Schalteinrichtung, welche zumindest zwei unterschiedliche Schaltstellungen aufweist. D.h. zumindest ein bewegliches Schaltelement der Schalteinrichtung weist zumindest zwei Schaltstellungen auf. Gleichzeitig weist das Pumpenaggregat zumindest zwei verschiedene Betriebszustände auf und die Schalteinrichtung ist mit dem Pumpenaggregat über eine hydraulische Verbindung, vorzugsweise ausschließlich über eine hydraulische Verbindung, verbunden. Dies ist vorzugsweise diejenige hydraulische Verbindung, durch welche eine Flüssigkeit von dem Pumpenaggregat gefördert wird. Die Schalteinrichtung ist erfindungsgemäß ferner so ausgebildet, dass die Schaltstellungen der Schalteinrichtung bzw. deren Schaltelemente abhängig von einer Verweildauer des Pumpenaggregates in zumindest einem der beiden Betriebszustände erreicht werden. Hinsichtlich der Funktionsweise wird auf die obige Beschreibung des Verfahrens verwiesen. Das hydraulische System gemäß der Erfindung dient der Umsetzung des Verfahrens. Es ist zu verstehen, dass sich aus der vorangehenden Verfahrensbeschreibung ergebende Vorrichtungsmerkmale ebenfalls bevorzugte Ausgestaltungen des hydraulischen Systems sind und gleichzeitig nachfolgend anhand des hydraulischen Systems beschriebene Verfahrensabläufe bevorzugte Verfahrensschritte des erfindungsgemäßen Verfahrens sein können.

Besonders bevorzugt weist die Schalteinrichtung bzw. zumindest ein Schaltelement der Schalteinrichtung zwei Schaltstellungen auf und die Schalteinrichtung ist derart ausgebildet, dass bei Betrieb des Pumpenaggregates in einem ersten Betriebszustand die Schalteinrichtung in jeder der beiden Schaltstellungen selbsthaltend ist. Dies bedeutet, dass kein externer Antrieb zum Halten der Schaltstellungen erforderlich ist. Vorzugsweise erfolgt das Halten der Schaltstellungen, wie oben beschrieben, durch den hydraulischen Druck im System. Weiter bevorzugt sind das Pumpenaggregat sowie die Schalteinrichtung derart ausgestaltet, dass sie zum Umschalten zwischen den Schaltstellungen in einer Weise zusammenwirken, dass in einem zweiten Betriebszustand des Pumpenaggregates die Schalteinrichtung zwischen den beiden Schaltstellungen hin- und her- schaltet und zum Halten einer gewünschten Schaltstellung das Pumpenaggregat beim Erreichen der gewünschten Schaltstellung in den ersten Betriebszustand versetzt wird. Dies bedeutet, dass durch Betrieb des Pumpenaggregates in dem zweiten Betriebszustand die Selbsthaltefunktion aufgehoben wird. Gleichzeitig wird eine Hin- und Her- Bewegung der Schalteinrichtung zwischen den möglichen Schaltstellungen eingeleitet, so dass durch gezieltes Wiedereinschalten des ersten Betriebszustandes zu einem bestimmten Zeitpunkt, in welchem sich die Schalteinrichtung bzw. deren Schaltelement in einer gewünschten Schaltstellung befindet, die Selbsthaltefunktion wieder in Betrieb genommen wird, so dass die Schalteinrichtung dann wieder in dieser Schaltstellung stabil gehalten wird.

Wie oben beschrieben ist das Pumpenaggregat vorzugsweise so ausgebildet, dass sein Antriebsmotor in der Drehzahl einstellbar bzw. regelbar ist. Dazu weist das Pumpenaggregat vorzugsweise eine entsprechend ausgebildete Steuereinrichtung auf. Weiter bevorzugt ist das Pumpenaggregat so ausgebildet, dass in dem ersten Betriebszustand das Pumpenaggregat mit einer Drehzahl oberhalb einer Grenzdrehzahl betrieben wird und das in dem zweiten Betriebszustand des Pumpenaggregates mit einer Drehzahl kleiner oder gleich der Grenzdrehzahl betrieben wird oder stillsteht. Die entsprechende Grenzdrehzahl kann in einer Steuereinrichtung, welche die Drehzahl des Pumpenaggregates einstellt und auch das Umschalten der Schalteinrichtung veranlasst, gespeichert sein. Dabei ist die Grenzdrehzahl so gewählt, dass unterhalb der Grenzdrehzahl ein hydraulischer Druck vorzugsweise so gering ist, dass die Schalteinrichtung nicht mehr selbsttätig durch den hydraulischen Druck gehalten wird.

Gemäß einer weiter bevorzugten Ausführungsform ist die Schalteinrichtung mit einem Antriebselement versehen, welches in dem zweiten Betriebszustand des Pumpenaggregates die Schalteinrichtung zwischen den beiden Schaltstellungen hin- und her- schaltet. Das Hin- und Her-Schalten zwischen den Schaltstellungen bedeutet, dass jede der beiden Schaltstellungen vorzugsweise zumindest einmal erreicht wird. Das bedeutet z.B., wenn sich die Schalteinrichtung anfänglich in einer ersten Schaltstellung befindet, schaltet die Schalteinrichtung zumindest einmal in die zweite Schaltstellung. Weiter bevorzugt schaltet sie von der zweiten Schaltstellung dann noch zumindest einmal zurück in die erste Schaltstellung. So kann das Pumpenaggregat gezielt bei der ersten oder der zweiten Schaltstellung wieder in den ersten Betriebszustand versetzt werden, um die Schaltstellung dann in der beschriebenen Weise zu halten. Das Antriebselement ist vorzugsweise ein Antriebselement, welches mit Energie aus dem hydraulischen System versorgt wird, das heißt mit Energie, welche von dem Pumpenaggregat bereitgestellt wird.

Gemäß einer weiter bevorzugten Ausführungsform ist das Antriebselement derart ausgestaltet, dass es durch eine von einer hydraulischen Strömung verursachten Kraft, insbesondere durch eine hydraulische Trägheitskraft in dem hydraulischen System bewegbar ist und/oder einen Energiespeicher aufweist, welcher derart ausgestaltet ist, dass er bei Betrieb des Pumpenaggregates in dem ersten Betriebszustand Energie bzw. Schaltenergie aus dem hydraulischen System speichert und bei Betrieb des Pumpenaggregates in dem zweiten Betriebszustand diese Energie bzw. Schaltenergie abgibt, mittels welcher die Schalteinrichtung bewegt wird. Die in dem Strömungsweg strömende Flüssigkeit hat eine kinetische Energie, welche sie auch bei Abschalten des Pumpenaggregates oder bei Verringerung der Drehzahl des Pumpenaggregates noch für eine gewisse Zeit beibehält. Diese Energie kann als Schaltenergie genutzt werden, um die Schalteinrichtung bzw. ein Schaltelement der Schalteinrichtung in der beschriebenen Weise hin und her zu bewegen. Dies ist insbesondere möglich, da bei Verringerung der Drehzahl des Pumpenaggregates der Druck im System schneller abnimmt als die kinetische Energie der Flüssigkeit. So kann die Selbsthaltefunktion der Schalteinrichtung durch Verminderung des Druckes sehr schnell aufgehoben werden, während aufgrund der Trägheit der strömenden Flüssigkeit noch ausreichend Energie im System vorhanden ist, um die Schalteinrichtung umzuschalten. Das Antriebselement kann in Form von Prallflächen oder Mitnehmern ausgebildet sein, auf welche die Strömung einwirkt.

Alternativ oder zusätzlich kann die Schalteinrichtung mit einem zusätzlichen Energiespeicher, beispielsweise einem Federspeicher, einem magnetischen und/oder pneumatischen Energiespeicher ausgestattet sein. Ein solcher Energiespeicher kann in dem ersten Betriebszustand mit Druck beaufschlagt werden und Energie aus dem hydraulischen System aufnehmen, welche er dann in den zweiten Betriebszustand wieder abgibt, um die Schalteinrichtung in der beschriebenen Weise hin und her zu schalten.

Wie oben beschrieben ist die Schalteinrichtung vorzugsweise derart ausgestaltet, dass sie bei Betrieb des Pumpenaggregates in dem zweiten Betriebszustand zumindest einmal in jede der beiden Schaltstellungen schaltet.

Gemäß einer weiter bevorzugten Ausführungsform kann die Schalteinrichtung ein Rückstellelement, beispielsweise eine Rückstellfeder aufweisen, welches derart ausgebildet ist, dass das Hin- und Her-Schalten der Schalteinrichtung in einer definierten Ausgangslage der Schalteinrichtung endet und die Schalteinrichtung bei Stillstand des Pumpenaggregates in dieser definierten Ausgangslage hält. Dadurch kann sichergestellt werden, dass bei der Inbetriebnahme des Pumpenaggregates die Schalteinrichtung sich stets in einer definierten Schaltstellung befindet.

Das hydraulische System weist bevorzugt eine Steuereinrichtung, insbesondere eine elektronische Steuereinrichtung auf, welche derart ausgebildet ist, dass sie auf Grundlage eines Schaltbefehls zum Umschalten der Schalteinrichtung aus der ersten in die zweite Schaltstellung das Pumpenaggregat zunächst aus dem ersten Betriebszustand in den zweiten Betriebszustand versetzt und nach einer bestimmten auf die Zeitdauer der Hin- und Her- Bewegung der Schalteinrichtung derart abgestimmten Zeitspanne das Pumpenaggregat wieder in den ersten Betriebszustand versetzt, dass sich die Schalteinrichtung in der zweiten Schaltstellung befindet, wenn das Pumpenaggregat wieder in den ersten Betriebszustand versetzt wird. So wird ausgehend von der ersten Schaltstellung ein Umschalten in die zweite Schaltstellung ermöglicht. Die Steuereinrichtung ist besonders bevorzugt in die ohnehin vorhandene Steuer- und/oder Regelungselektronik des Pumpenaggregates integriert. So kann die ohnehin vorhandene Elektronik zur Steuerung bzw. Regelung des Pumpenaggregates vorzugsweise zusätzlich dazu genutzt werden, die Schalteinrichtung von einem ersten Schaltzustand in einen zweiten Schaltzustand umzuschalten.

Das hydraulische System ist vorzugsweise so ausgestaltet, dass das Pumpenaggregat einen Drehzahlsteller zur Veränderung der Drehzahl des Pumpenaggregates aufweist, wobei der Drehzahlsteller vorzugsweise eine Bremsschaltung aufweist, welche das Pumpenaggregat bei einer Verringerung der Drehzahl aktiv anbremst. Ein solcher Drehzahlsteller kann in die Steuereinrichtung des hydraulischen Systems oder des Pumpenaggregates integriert sein und vorzugsweise einen Frequenzumrichter aufweisen. Eine solche Bremsschaltung bedeutet, dass bei einer Reduzierung der Drehzahl das Pumpenaggregat nicht nur ausläuft, sondern aktiv durch geeignete Bestromung der Spulen des elektrischen Antriebsmotors abgebremst wird. Dies ist insbesondere dann von Vorteil, wenn die Energie zum Betrieb des Antriebselementes aus der hydraulischen Strömung in dem System entnommen werden soll. Durch besonders schnelle Reduzierung der Drehzahl, welche eine solche Bremsschaltung ermöglicht, wird der hydraulische Druck schnell reduziert, während die Strömung aufgrund der Massenträgheit des Fluids noch für eine kurze Zeit erhalten bleibt. So kann die Energie dieser Strömung ausgenutzt werden, um das Antriebselement zu bewegen, während ein hydraulischer Druck, welcher genutzt werden kann, die Schalteinrichtung in der gewünschten Schaltstellung zu halten, bereits weggefallen ist.

Das erfindungsgemäße hydraulische System und das erfindungsgemäße Verfahren können für verschiedenste Einsatzzwecke zur Anwendung kommen. Eine Schalteinrichtung kann beispielsweise zum Umschalten zwischen zwei Strömungswegen in einem hydraulischen System dienen, beispielsweise in Systemen, welche Flüssigkeiten zu verschiedenen Entnahmestellen verteilen, Reinigungssystemen, Springbrunnen mit verschiedenen, nicht gleichzeitig betriebenen Austrittsdüsen und insbesondere in Heizungsanlagen. So ist es in Kompaktheizungsanlagen üblich, zwei Kreisläufe vorzusehen, einen Heizungskreislauf, welcher durch die Heizkörper des Gebäudes verläuft, und einen Kreislauf, welcher durch einen Wärmetauscher zum Erwärmen von Brauchwasser verläuft. Zwischen diesen Heizkreisläufen kann mit Hilfe eines Umschaltventils, das heißt einer Schalteinrichtung umgeschaltet werden. Das erfindungsgemäße System und das erfindungsgemäße Verfahren ermöglichen das Umschalten durch speziellen Betrieb des Pumpenaggregates in diesem System, sodass auf einen separaten Antriebsmotor für ein Umschaltventil verzichtet werden kann.

Wenn die Energie zum Antreiben eines Antriebselementes der Schalteinrichtung dem hydraulischen System entnommen wird, sei es, dass die Energie in einem separaten Energiespeicher gespeichert wird oder aber in Form von kinetischer Energie des strömenden Fluids zur Verfügung gestellt wird, ist es vorteilhaft, dass sich die Schalteinrichtung in einer ersten Schaltstellung, welche der Ruhelage bei Inbetriebnahme des Systems entspricht, in einer Stellung befindet, in welcher der Kreislauf durch den Wärmetauscher zum Erwärmen des Brauchwassers geöffnet ist und der Heizkreislauf geschlossen ist. Dies ist von Vorteil, da der Kreislauf durch den Wärmetauscher ein definierter und bekannter Kreislauf ist, welcher sich in der Regel stets in einem unveränderten hydraulischen Zustand befindet. Dieser Kreislauf ist in der Regel in einem Heizkessel selber ausgebildet und herstellerseitig bekannt. Der Heizkreislauf durch das Gebäude ist hingegen in seiner genauen Ausgestaltung nicht bekannt und weist eine Vielzahl von Ventilen auf, deren Ventilstellungen nicht bekannt sind, sodass auch der Durchfluss durch diesen Kreislauf nicht bekannt ist. Wenn in der ersten Schaltstellung der Kreislauf durch den Wärmetauscher geöffnet ist, ist somit sichergestellt, dass in dieser ersten Schaltstellung stets ausreichend Energie im System vorhanden ist, um das Antriebselement zum Umschalten in die zweite Schaltstellung antreiben zu können.

Wenn die Schalteinrichtung durch den hydraulischen Druck im System selbsttätig in einer ihrer Schaltstellungen gehalten wird, so kann durch Anpassung der Größe einer Druckfläche, auf welche der hydraulische Druck wirkt, die auftretende Haltekraft angepasst werden. Auch können, in dem Fall, dass das Antriebselement von der hydraulischen Strömung im System bewegt wird, Prall- oder Druckflächen des Antriebselementes in ihrer Größe angepasst werden, um die auftretenden Kräfte zur Bewegung der Schalteinrichtung zu verändern. So kann die Schalteinrichtung an ein spezielles hydraulisches System angepasst werden, indem die Flächen, auf welche hydraulische Drücke oder Strömungen wirken, so dimensioniert werden, dass die gewünschten Kräfteverhältnisse zum Halten und/oder Bewegen der Schalteinrichtung erzeugt werden.

Nachfolgend wird die Erfindung beispielhaft anhand der beigefügten Figuren beschrieben. In diesen zeigt:
Fig. 1 schematisch ein erstes Beispiel für ein erfindungsgemäßes hydraulisches System, wobei das hydraulische System in einem Ruhezustand ist,
Fig. 2 das hydraulische System gemäß Fig. 1 in einer ersten Schaltstellung der Schalteinrichtung,
Fig. 3 das hydraulische System gemäß Fig. 1 und 2 in einer zweiten Schaltstellung der Schalteinrichtung,
Fig. 4 das hydraulische System gemäß Fig. 3 in der zweiten Schaltstellung im weiteren Betrieb,
Fig. 5 eine Explosionsansicht einer Schalteinrichtung für ein erfindungsgemäßes hydraulisches System gemäß einer ersten Ausführungsform,
Fig. 6 eine Schnittansicht der Schalteinrichtung gemäß Fig. 5 in einem Ruhezustand,
Fig. 7 eine Schnittansicht gemäß Fig. 6, in welcher sich die Schalteinrichtung in einer ersten Schaltstellung befindet,
Fig. 8 eine Schnittansicht gemäß Fig. 6 und 7, wobei sich die Schalteinrichtung in einer zweiten Schaltstellung befindet,
Fig. 9 eine Schnittansicht einer Schalteinrichtung gemäß einer zweiten Ausführungsform der Erfindung,
Fig. 10 einen Schnitt durch die Schalteinrichtung sowie ein angrenzendes Pumpenaggregat entlang der Linien X-X in Fig. 9,
Fig. 11 eine Schnittansicht einer Schalteinrichtung gemäß einer dritten Ausführungsform, wobei sich die Schalteinrichtung in einer Ruhelage befindet,
Fig. 12 eine Schnittansicht entsprechend Fig. 11, wobei sich die Schalteinrichtung in einer ersten Schaltstellung befindet,
Fig. 13 eine Schnittansicht entsprechend Fig. 11 und 12, wobei sich die Schalteinrichtung in einer zweiten Schaltstellung befindet,
Fig. 14 eine Schnittansicht einer Schalteinrichtung gemäß einer vierten Ausführungsform, wobei sich die Schalteinrichtung in einer Ruhelage befindet,
Fig. 15 eine Schnittansicht entsprechend Fig. 14, wobei sich die Schalteinrichtung in einer zweiten Schaltstellung befindet,
Fig. 16 eine Schnittansicht einer Schalteinrichtung gemäß einer sechsten Ausführungsform, wobei sich die Schalteinrichtung in einer Ruhelage befindet,
Fig. 17 eine Schnittansicht entsprechend Fig. 16, wobei sich die Schalteinrichtung in ihrer zweiten Schaltstellung befindet,
Fig. 18 eine Schnittansicht einer Schalteinrichtung gemäß einer siebten Ausführungsform, wobei sich die Schalteinrichtung in einer ersten Schaltstellung befindet, und
Fig. 19 eine Schnittansicht entsprechend Fig. 18, wobei sich die Schalteinrichtung in ihrer zweiten Schaltstellung befindet.

Nachfolgend wird die Erfindung beispielhaft anhand eines hydraulischen Systems, welches ein Heizungssystem darstellt, beschrieben. Es ist jedoch zu verstehen, dass die Erfindung auch in anderen hydraulischen Systemen, insbesondere in hydraulischen Systemen, in welchen ein Umschalten zwischen zwei Strömungswegen erforderlich ist, zum Einsatz kommen kann. Dies gilt besonders bevorzugt für Kreislaufsysteme, ist jedoch ausdrücklich nicht auf solche beschränkt.

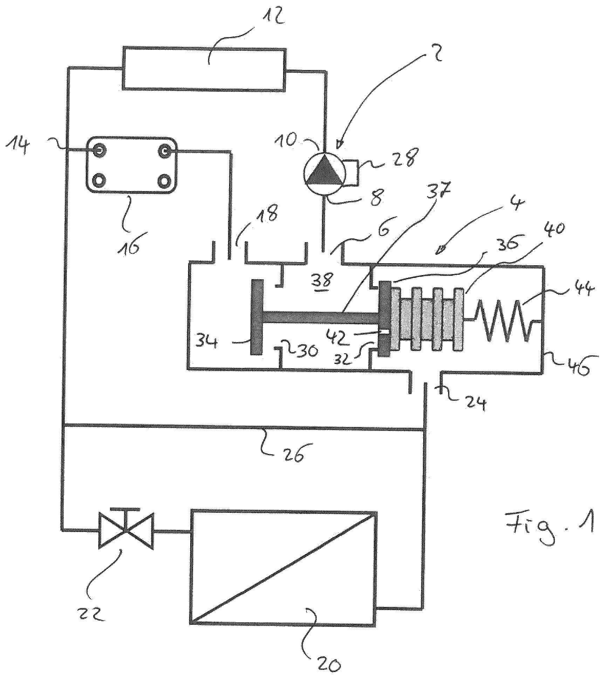

Fig. 1 zeigt ein Ausführungsbeispiel eines erfindungsgemäßen hydraulischen Systems, wie es in einer Heizungs- insbesondere Kompaktheizungsanlage zum Einsatz kommt. Das hydraulische System weist als wesentliche Komponenten ein als Umwälzpumpenaggregat ausgebildetes Pumpenaggregat 2 sowie eine als Umschaltventil wirkende Schalteinrichtung 4 auf. Der Ausgang 6 der Schalteinrichtung 4 ist in diesem Beispiel hydraulisch mit dem saugseitigen Anschluss 8 des Pumpenaggregates 2 verbunden. Die Schalteinrichtung 4 liegt in diesem Ausführungsbeispiel somit an der Saugseite des Pumpenaggregates 2, dies bedeutet, dass die Druckdifferenz zwischen dem druckseitigen Anschluss 10 bzw. der Ausgangsseite 10 des Pumpenaggregates 2 und der Schalteinrichtung 4 größer ist, als zwischen der Schalteinrichtung 4 und dem saugseitigen Anschluss 8. Ausgangsseitig schließt sich in diesem Ausführungsbeispiel an das Pumpenaggregat 2 im Strömungsweg ein Primärwärmetauscher 12 an. Der Primärwärmetauscher 12 ist beispielsweise der Wärmetauscher in einem Heizkessel, in welchem das Heizwasser durch einen Gas-, Öl- oder Pelletbrenner erwärmt wird. In dem Primärwärmetauscher 12 kann das Heizwasser jedoch auch auf andere Weise erwärmt werden, beispielsweise durch eine Solaranlage, Wärmepumpe oder ähnliches. Darüber hinaus ist zu verstehen, dass das System in entsprechender Weise auch als Kühlsystem arbeiten könnte, wobei der Primärwärmetauscher 12 nicht zum Erwärmen sondern zum Kühlen dienen würde.

Stromabwärts des Primärwärmetauschers 12 schließt sich ein Abzweig- bzw. Knotenpunkt 14 an, an welchem der Strömungsweg verzweigt. Ausgehend von dem Knotenpunkt 14 verläuft ein erster Zweig des hydraulischen Systems durch einen Sekundärwärmetauscher 16, in welchem beispielsweise zu erwärmendes Brauchwasser erwärmt wird. Ausgangsseitig des Sekundärwärmetauschers 16 mündet dieser Zweig des hydraulischen Kreislaufes in einen ersten Eingang 18 der Schalteinrichtung 4. Ein zweiter Zweig, welcher sich ausgehend von dem Knotenpunkt 14 erstreckt, bildet einen Heizkreislauf, welcher beispielsweise zur Erwärmung eines Gebäudes dient. Dieser Heizkreislauf wird hier schematisch durch einen Heizkörper 20 mit einem an diesem angeordneten Regulierventil 22 dargestellt. Das Regulierventil 22 kann beispielsweise ein übliches Thermostatventil sein. Ausgangsseitig mündet dieser Heizkreislauf in einen zweiten Eingang 24 der Schalteinrichtung 4. Es ist zu verstehen, dass tatsächlich ein solcher Heizkreis mehr als einen Heizkörper 20 aufweisen kann, welche parallel und/oder in Reihe geschaltet sind. In diesem Beispiel weist der Heizkreis noch einen Bypass 26 auf, welcher dazu dient, eine Strömung durch den Heizkreis zu ermöglichen, wenn das Regulierventil 22 bzw. alle Regulierventile 22 in dem Heizkreis geschlossen sind.

Erfindungswesentlich sind die spezielle Ausgestaltung sowie das Verfahren zum Betrieb der Schalteinrichtung 4, welche so ausgestaltet ist, dass auf einen separaten Antrieb für die Schalteinrichtung 4 verzichtet werden kann und diese vielmehr allein über die Umwälzpumpe 2 durch Änderungen des Betriebszustandes des Pumpenaggregates 2 umgeschaltet werden kann. Dies erfolgt durch eine Steuereinrichtung 28 des Pumpenaggregates 2. In diesem Beispiel ist die Steuereinrichtung 28 direkt in das Pumpenaggregat 2 integriert, beispielsweise direkt am oder im Motorgehäuse des Pumpenaggregates 2 angeordnet. Bei dem Pumpenaggregat 2 handelt es sich vorzugsweise um ein in der Drehzahl regelbares, über einen Frequenzumrichter angesteuertes Umwälzpumpenaggregat. Dieses ist insbesondere als Kreiselpumpenaggregat, bevorzugt mit einem nasslaufenden elektrischen Antriebsmotor ausgebildet.

Die Schalteinrichtung 4 dient dazu, zwischen den zwei beschriebenen Strömungswegen, das heißt einmal durch den Sekundärwärmetauscher 16 und einmal durch die Heizkörper 20 des Heizkreises umzuschalten. Dazu weist die Schalteinrichtung zwei Ventilsitze 30 und 32 auf, welchen jeweils ein Ventilelement 34 bzw. 36 (Schaltelement 34 bzw. 36) zugeordnet ist. Die Ventilelemente 34, 36 sind fest miteinander verbunden und so angeordnet, dass sie wechselseitig mit dem jeweils zugehörigen Ventilsitz 30, 32 in dichtende Anlage kommen können. Das heißt, wenn, wie in dem in Fig. 1 gezeigten Zustand das Ventilelement 36 dicht an dem Ventilsitz 32 anliegt, ist das Ventilelement 34 von seinem Ventilsitz 30 beabstandet, sodass der Strömungsweg durch den Ventilsitz 30 geöffnet ist. Die Ventilsitze 30, 32 münden in einen Anschlussraum 38, welcher mit dem Ausgang 6 in hydraulischer Verbindung steht. In diesem Beispiel sind die Ventilsitze 30, 32 einander und dem Anschlussraum 38 abgewandt. Das Ventilelement 34 ist dem Anschluss 18 zugewandt, sodass es aus dem ersten Eingang 18 angeströmt und mit Druck beaufschlagt wird. Das Ventilelement 36 ist dem zweiten Eingang 24 zugewandt und wird so durch den zweiten Eingang 24 angeströmt und mit Druck beaufschlagt. Diese Anordnung der Ventilelemente 34, 36 bewirkt, dass der an den Eingängen 18 und 24 herrschende Druck jeweils so auf die Ventilelemente 34, 36 wirkt, dass diese jeweils gegen ihren zugehörigen Ventilsitz 30, 32 gedrückt werden. Dadurch wird eine Selbsthaltefunktion der Schalteinrichtung 4 erreicht, wie sie nachfolgend beschrieben werden wird.

Dem Ventilsitz 32 abgewandt, ist an dem Ventilelement 36 darüber hinaus ein elastischer Faltenbalg 40 angeordnet, dessen geschlossener Innenraum über ein Durchgangsloch 42 in dem Ventilelement 36 mit dem Anschlussraum 38 in Verbindung steht. Das Durchgangsloch 42 ist als Drosselstelle ausgelegt. An dem dem Ventilelement 36 abgewandten Ende des Faltenbalges 40 greift eine als Zugfeder ausgebildete Feder 44 an, welche mit ihrem anderen Ende am Gehäuse 46 der Schalteinrichtung 4 befestigt ist.

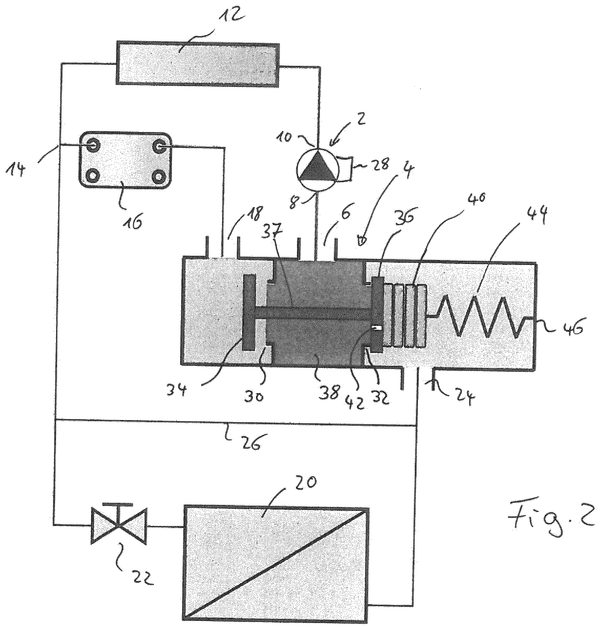

Fig. 1 zeigt die erste Schaltstellung der Schalteinrichtung 4 bzw. der Schaltelemente (Ventilelemente 34 und 36). In dieser ist der Ventilsitz 32 durch das Ventilelement 36 verschlossen und somit der Strömungsweg durch den Heizkreis verschlossen. Wenn das Pumpenaggregat 2 fördert, fördert es somit Flüssigkeit, das heißt insbesondere Wasser, im Kreislauf durch den Primärwärmetauscher 12 und den Sekundärwärmetauscher 16. Dadurch, dass das Ventil an dem Ventilsitz 32 geschlossen ist, überträgt sich der Druck von dem Knotenpunkt 14 durch den geschlossenen Heizkreis 20 und gegebenenfalls durch den Bypass 26 zu dem zweiten Eingang 24 der Schalteinrichtung 4. Dort wirkt dieser Druck gegen die Stirnseite des Faltenbalges 40. Gleichzeitig wirkt über das Durchgangsloch 32 im Inneren des Faltenbalges der in dem Anschlussraum 38 herrschende Druck. Dieser entspricht im Wesentlichen dem Druck am saugseitigen Anschluss 8 des Pumpenaggregates 2. So besteht an der Stirnseite des Faltenbalges 40 eine Druckdifferenz, welche bei Betrieb des Pumpenaggregates 2 in diesem Zustand dazu führt, dass der Faltenbalg 40 gestaucht und die Zugfeder 44 gelängt wird, wie es in Fig. 2 gezeigt ist. Dies ist der Zustand, welcher der Brauchwassererwärmung dient, in welchem das Heizmedium durch den Sekundärwärmetauscher 16 gefördert wird. Solange der am zweiten Eingang 24 herrschende Druck größer als die Kraft der Feder 44 ist, wird dieser Zustand selbsttätig gehalten. Dies ist solange der Fall, wie sich das Pumpenaggregat 2 in einem ersten Betriebszustand befindet, in welchem die Drehzahl über einer vorbestimmten Grenzdrehzahl liegt. Die vorbestimmte Grenzdrehzahl ist in der Steuereinrichtung 28 hinterlegt und so eingestellt, dass der Druck am zweiten Eingang 24 so hoch ist, dass die auf den Faltenbalg 40 und das Ventilelement 36 wirkende, von diesem Druck erzeugte Kraft größer ist als die von der Feder 44 aufgebrachte Zugkraft.

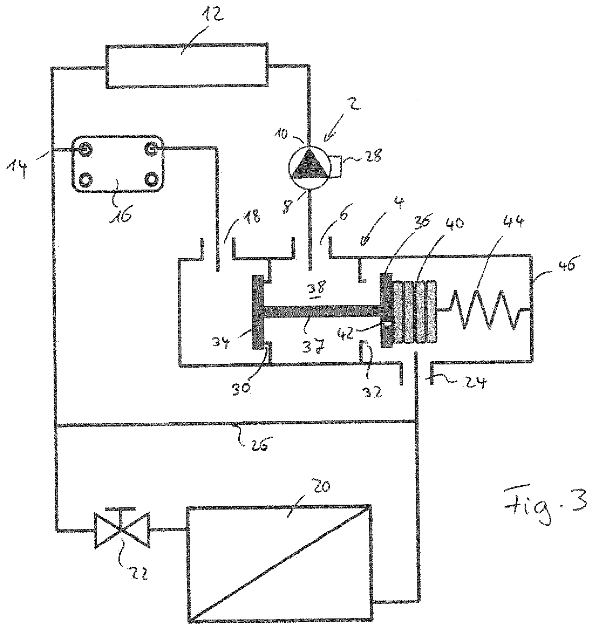

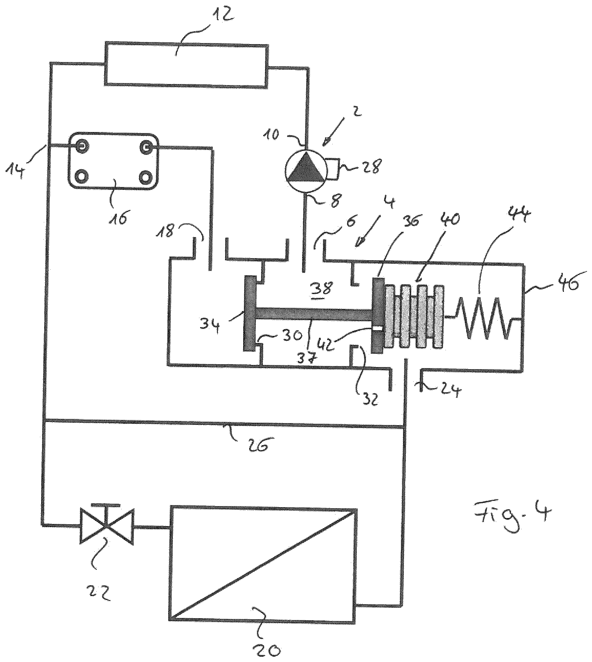

Um das Ventil bzw. die Schalteinrichtung 4 in seine zweite Schaltstellung zu bewegen, in welcher der Ventilsitz 30 geschlossen und der zweite Ventilsitz 32 geöffnet ist, wird das Pumpenaggregat 2 von der Steuereinrichtung 28 in einen zweiten Betriebszustand gebracht, in welchem die Drehzahl unterhalb der vorbestimmten Grenzdrehzahl liegt. In diesem Zustand fällt der Druck an dem zweiten Eingang 24 so weit ab, dass die von dem Druck an dem Faltenbalg 40 zum Ventilsitz 32 hin gerichtete Kraft geringer wird als die von der Feder 44 aufgebrachte Zugkraft. Dies führt dazu, dass sich die Feder 44, wie in Fig. 3 gezeigt, zusammenzieht und den Faltenbalg 40 mit dem daran befestigten Ventilelement 36 von dem Ventilsitz 32 abhebt. Aufgrund der Kopplung der Ventilelemente 36 und 34 wird dabei gleichzeitig das Ventilelement 34 an dem Ventilsitz 30 zur dichtenden Anlage gebracht. Das heißt die Ventilelemente 36 und 34 werden zwischen den ersten und der zweiten Schaltstellung hin- und her- bewegt. Bei dieser Bewegung entspannt sich der Faltenbalg 40 nicht unmittelbar, da sein Innenraum nur über das als Drossel wirkende Durchgangsloch 42 befüllt werden kann. So wird der Faltenbalg 40 zunächst im im Wesentlichen zusammengedrückten Zustand mitbewegt. Erst später entfaltet sich der Faltenbalg 40 wieder langsam in einen Zustand, wie er in Fig. 4 gezeigt ist. Wenn vor diesem Entfalten des Faltenbalges 40 das Pumpenaggregat 2 von dessen Steuereinrichtung 28 wieder in den ersten Betriebszustand versetzt wird, erhöht sich die Drehzahl des Pumpenaggregates 2 wieder und es erhöht sich damit wieder der Druck an dem Knotenpunkt 14, welcher sich nun über den Sekundärwärmetauscher 16 zu dem ersten Eingang 18 und damit auf die Oberfläche des Ventilelementes 34 überträgt. So wirkt auf das Ventilelement 34 eine Kraft, welche dieses gegen den Ventilsitz 30 gedrückt in dem geschlossenen Zustand hält. Somit wird wieder ein stabiler Zustand erreicht. Die Schalteinrichtung 4 ist somit derart bistabil ausgebildet, dass sie in jeder der zwei beschriebenen Schaltstellungen bei Betrieb des Pumpenaggregates 2 mit ausreichend hoher Drehzahl selbsttätig gehalten wird. Ein externer Antrieb oder eine externe Haltekraft ist dazu nicht erforderlich.

Wie beschrieben, hängt die Wahl der neuen Schaltstellung davon ab, zu welchem Zeitpunkt das Pumpenaggregat 2 wieder in den ersten Betriebszustand versetzt wird, das heißt die Wahl der Schaltstellung hängt davon ab, wie lange das Pumpenaggregat 2 in dem zweiten Betriebszustand betrieben wird. Wird das Pumpenaggregat 2 nicht rechtzeitig wieder in den ersten Betriebszustand 1 geschaltet, schaltet die Schalteinrichtung 4 durch Rückverlagerung der Ventilelemente 34 und 36 wieder in die erste Schaltstellung zurück. Wird dann das Pumpenaggregat 2 wieder in den ersten Betriebszustand versetzt, wird die Schalteinrichtung 4 wieder in der ersten Schaltstellung betrieben.

Ferner erfolgt das beschriebene Umschalten ebenfalls ohne externen Antrieb, sondern allein über eine hydraulische Kopplung des Pumpenaggregates 2 mit der Schalteinrichtung 4 über das hydraulische System selber. Die Feder 44 dient als Energiespeicher, welcher beim Betrieb in dem ersten Betriebszustand Energie aufnimmt und dann beim Umschalten in den zweiten Betriebszustand durch Entspannung wieder abgibt. So wird eine Kraft zur Bewegung des Ventilelementes von der Feder 44 erzeugt. Die dazu erforderliche Energie bzw. Schaltenergie nimmt die Feder 44 zuvor aus dem hydraulischen System in dem ersten Betriebszustand auf.

Der Faltenbalg 40 mit dem als Drossel wirkenden Durchgangsloch 42 dient einer Entkopplung der Feder 44 von den Ventilelementen 34 und 36 während des Ladevorganges, bei welchem die Feder 44 Energie aufnimmt. Der Faltenbalg 40 ermöglicht es nämlich, dass die Feder 44 in dem ersten Betriebszustand gedehnt wird, ohne dass sich die Ventilelemente 34 und 36 bewegen müssen. Die Ventilelemente 34 und 36 verbleiben vielmehr in der in Fig. 1 und 2 gezeigten Ausgangslage. Aufgrund der von dem Durchgangsloch 42 gebildeten Drosselstelle besteht jedoch zwischen der Feder 44 und dem Ventilelement 36 beim Umschalten in den zweiten Betriebszustand mit geringerer Drehzahl im Wesentlichen eine unmittelbare Kopplung zwischen der Feder 44 und dem Ventilelement 36, sodass letzteres von der Feder 44 direkt bewegt wird. Wesentlich ist es, dass die Steuereinrichtung 28 das Pumpenaggregat 2 von dem zweiten Betriebszustand 2 ausreichend schnell wieder in den ersten Betriebszustand 1 schaltet, bevor der Faltenbalg 40 sich vollständig entfalten kann, sodass die Schalteinrichtung bzw. das Ventilelement 34 dann wieder durch den hydraulischen Druck in der in Fig. 4 gezeigten zweiten Schaltstellung gehalten wird. Wenn in dieser zweiten Schaltstellung das Pumpenaggregat 2 dann abgeschaltet wird, fällt der auf das Ventilelement 34 wirkende hydraulische Druck weg, sodass auf das Ventilelement 34 und das Ventilelement 36 keine Drucckraft gegen den Faltenbalg 40 mehr wirkt. Dies bewirkt, dass der Faltenbalg 40 sich aufgrund seiner Elastizität dann weiter in den in Fig. 1 gezeigten Zustand entfalten kann. Wenn in diesem Zustand die Feder 44 vollständig gestaucht ist, drückt so der Faltenbalg 40, welcher dann als Feder wirkt, die Ventilelemente 34 und 36 wieder zurück in ihre Ausgangslage, das heißt die erste Schaltstellung, wie sie in Fig. 1 gezeigt ist. Aus dieser ersten Schaltstellung kann das System dann wieder durch Inbetriebnahme des Pumpenaggregates 2 in Betrieb genommen werden. Zusätzlich zu der Elastizität des Federbalges 40 könnte eine weitere Druckfeder im Inneren oder außerhalb des Faltenbalges 40 als Rückstellelement vorgesehen sein.

Wesentlich für das System ist, dass die zwei Betriebszustände lediglich unterschiedliche Drehzahlen und damit unterschiedliche Ausgangsdrücke des Umwälzpumpenaggregates 2 bedingen, nicht jedoch eine Drehrichtungsumkehr des Pumpenaggregates 2. Dies kommt dem Wirkungsgrad zugute. Ferner ist es so nicht erforderlich, zum Umschalten der beiden Betriebszustände das Pumpenaggregat 2 vollständig auszuschalten. Es ist jedoch auch möglich, dass der zweite Betriebszustand nicht nur eine verringerte Drehzahl aufweist, sondern dass das Pumpenaggregat 2 im zweiten Betriebszustand vollständig angehalten wird. Auch dann muss es nur schnell genug wieder in Betrieb genommen werden, um eine Rückbewegung der Ventilelemente 34 durch Expansion des Faltenbalges 40 oder gegebenenfalls einer zusätzlichen Feder zu verhindern. Das bedeutet, die Wahl der Schaltstellung ist davon abhängig, wie lange das Pumpenaggregat 2 in dem zweiten Betriebszustand betrieben wird.

Die hier beschriebene Schalteinrichtung 4, wie auch die nachfolgend beschriebenen Ausführungsbeispiele von Schalteinrichtungen sind dafür vorgesehen, in der beschriebenen Weise an der Saugseite des Pumpenaggregates 2 angeordnet zu werden. Es ist jedoch zu verstehen, dass eine entsprechend ausgebildete Schalteinrichtung auch an der Druckseite des Pumpenaggregates 2 Verwendung finden könnte. Bei der in Fig. 1 bis 4 gezeigten Schalteinrichtung müssten dann lediglich die Ventilelemente 34 und 36 nicht an voneinander abgewandten Ventilsitzen 30, 32, sondern an einander zugewandten Ventilsitzen, das heißt im Inneren des Anschlussraumes 38 angeordnet werden, um die gewünschte Selbsthaltefunktion, wie sie beschrieben wurde, zu erreichen.

Nachfolgend werden nun verschiedene Ausführungsbeispiele von Schalteinrichtungen beschrieben, welche alle in der in den Fig. 1 bis 4 gezeigten Weise in ein hydraulisches System, wie das gezeigte Heizungssystem, integriert werden könnten. Die übrigen, in den nachfolgenden Beispielen nicht gezeigten Bauteile, insbesondere das Pumpenaggregat 2 sowie die Wärmetauscher 12, 16 und 20 und deren Anordnung können entsprechend sein. Insofern wird auf die vorangehende Beschreibung verwiesen.

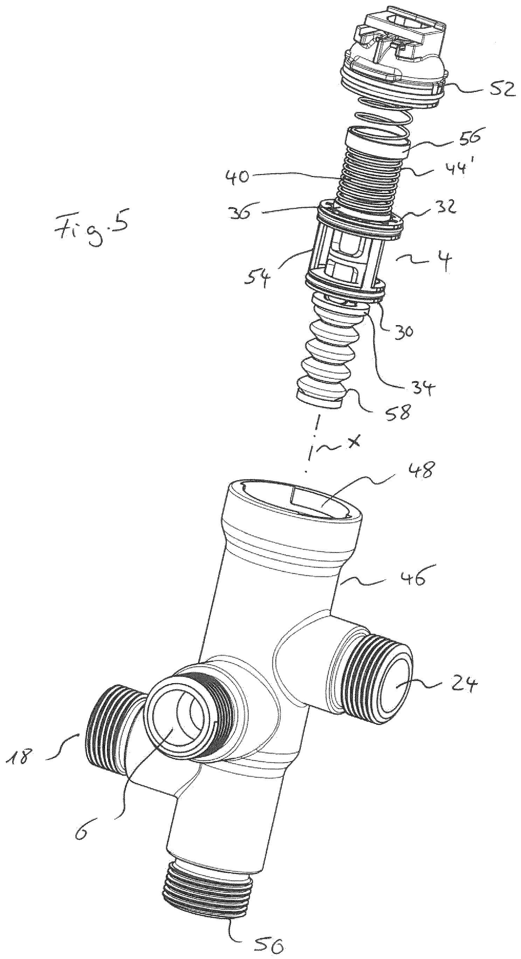

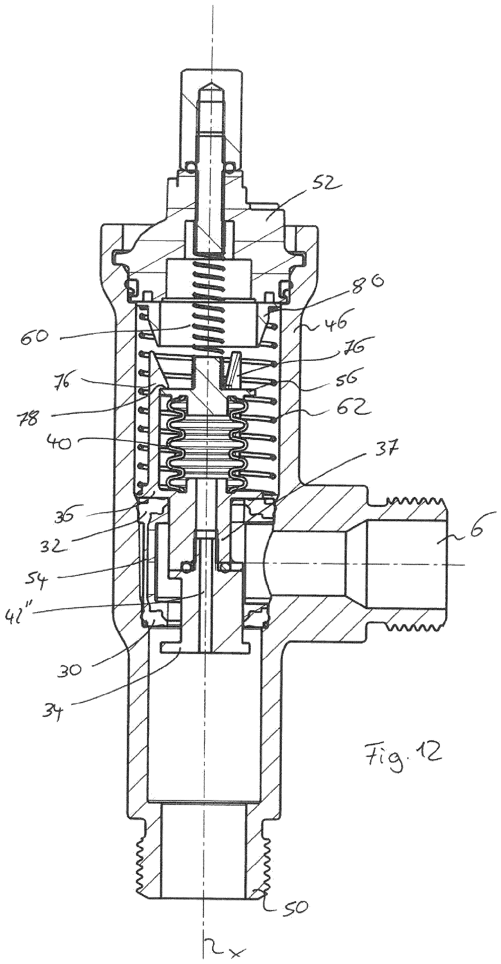

Die nachfolgend beschriebenen Ausführungsbeispiele gemäß Fig. 5 bis 8 sowie 11 bis 19 unterscheiden sich in der Art des Aufbaus der Schalteinrichtung. Diesen Schalteinrichtungen gemeinsam ist ein Gehäuse 46, in welchem die eigentliche Schalteinrichtung 4 als Kartusche angeordnet ist. Dies ermöglicht eine einfache Montage auch in komplexen Leitungssystemen, wie sie beispielsweise integrierte Baueinheiten für Kompaktheizungsanlagen, sogenannte Heizungsblöcke aufweisen. Das Gehäuse 46 weist eine Einsetzöffnung 48 an einem Längsende sowie eine weitere Montageöffnung 50 am entgegengesetzten Längsende auf. Die Einsetzöffnung 48 wird durch einen Verschluss 52 und die Montageöffnung 50 wird zum Betrieb durch einen hier nicht gezeigten Gewindestopfen verschlossen. An dem Gehäuse sind der Ausgang 6 sowie der erste Eingang 18 und der zweite Eingang 24 als Anschlussstutzen ausgebildet. Anstelle dieser Anschlussstutzen können auch einstückige oder anderweitig ausgebildete Verbindungen zu weiteren Komponenten des hydraulischen Systems vorgesehen sein, insbesondere wenn das Gehäuse 46 Teil einer integrierten Baueinheit für eine Heizungsanlage ist. Wie auch in dem Ausführungsbeispiel gemäß Fig. 1 bis 4 sind die Eingänge 18 und 24 sowie der Ausgang 6 in axialer Richtung X versetzt, wobei der Ausgang 6 zwischen den Eingängen 18 und 24 liegt.

Die in den Fig. 5 bis 8 dargestellte Schalteinrichtung 4 funktioniert in der Weise, wie sie anhand der Fig. 1 bis 4 beschrieben wurde. Angrenzend an den Ausgang 6 ist ein Anschlussraum 38 im Inneren des Gehäuses 46 vorgesehen, welcher zwei voneinander abgewandte Ventilsitze 30 und 32 aufweist. Wie in Fig. 5 zu erkennen, sind die Ventilsitze 30 und 32 an einem zentralen Trägerelement 54 ausgebildet, welches dichtend in den Aufnahmeraum 38 eingeschoben wird. Dem Ventilsitz 30 zugewandt ist ein erstes Ventilelement 34, dem Ventilsitz 32 zugewandt ist ein zweites Ventilelement 36. Die Ventilelemente 34 und 36 sind die Schaltelemente der Schalteinrichtung und über ein Verbindungselement 37 miteinander verbunden. In dem hier gezeigten Beispiel wird das Verbindungselement 37 durch Verlängerungen der Ventilelemente 34 und 36, welche miteinander verschraubt sind, gebildet. Es ist jedoch auch eine anderweitige Verbindung oder ein einstückiger Aufbau der Ventilelemente 34 und 36 möglich.

An dem Ventilelement 34 liegt, wie anhand der Fig. 1 bis 4 beschrieben, eine Faltenbalg 40 an. Dieser ist an seinem dem Ventilelement 36 abgewandten Axialende durch eine als Druckfläche dienende Scheibe 56 verschlossen. Auf die Scheibe 56 wirkt der an dem zweiten Eingang 24 anliegende Druck, wie es vorangehend beschrieben wurde und erzeugt so eine dem Ventilsitz 32 zugewandte in Axialrichtung X gerichtete Druckkraft. Den Faltenbalg 40 umgebend ist eine Feder 44' angeordnet, welche sich mit einem ersten Axialende an dem Ventilelement 36 abstützt und an dem entgegengesetzten Axialende in dem Verschluss 52 und damit an dem Gehäuse 46 fixiert ist. Die Scheibe 56 ist in der Feder 44' befestigt, so dass sie die Feder in zwei Abschnitte teilt, einen ersten Abschnitt, welcher zwischen der Scheibe 56 und dem Verschluss 52 gelegen ist und einen zweiten Abschnitt, welcher zwischen der Scheibe 56 und dem Ventilelement 36 gelegen ist. Der erste Abschnitt der Feder 44'hat dabei die Funktion der Feder 44, welche anhand der Fig. 1 bis 4 beschrieben wurde und insgesamt wirkt die Feder 44' in den zwei Abschnitten sowohl als Zug- und als Druckfeder, wie nachfolgend beschrieben wird.

In dem Verbindungselement 37 ist ein Durchgangsloch 42' ausgebildet, welches wie das Durchgangsloch 42 als Drossel wirkt und den Innenraum des Faltenbalges 40 mit dem Innenraum eines zweiten Faltenbalges 58 verbindet, welcher an dem Ventilelement 34 an dessen dem Ventilsitz 30 abgewandten Seite angeordnet ist. So wird im Inneren der Faltenbälge 40 und 58 ein geschlossenes System geschaffen, welches mit einer Flüssigkeit, insbesondere Wasser gefüllt sein kann. Es findet dabei kein Flüssigkeitsaustausch mit dem umgebenden Fluid in dem hydraulischen System statt, so dass eine Verunreinigung der von dem Durchgangsloch 42 gebildeten Drosselstelle verhindert werden kann.

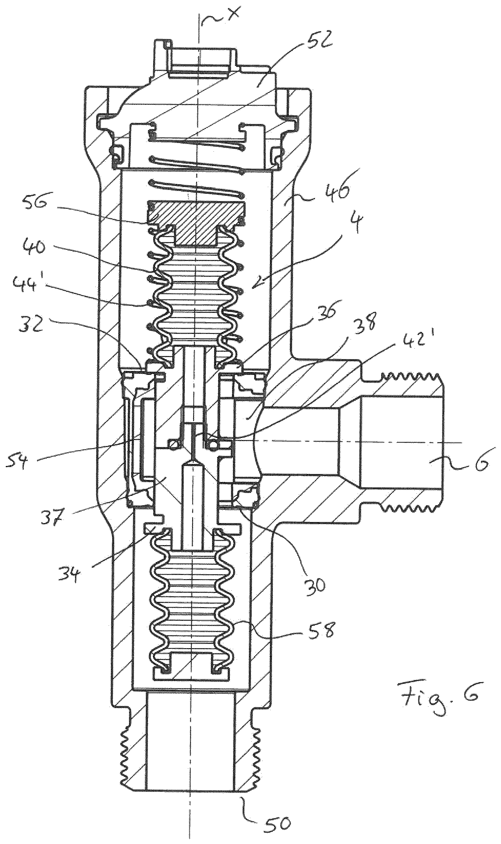

Fig. 6 zeigt die Ruhelage der Schalteinrichtung 4, in welcher sich die Schalteinrichtung bzw. deren Ventilelement 34 und 36 in ihrer ersten Schaltstellung befinden, in der das Ventilelement 36 an dem Ventilsitz 32 anliegt und das Ventilelement 34 von dem Ventilsitz 30 beabstandet ist. So ist entsprechend der Darstellung in Fig. 1 ein erster Strömungsweg, insbesondere durch einen Sekundärwärmetauscher 16 geöffnet, wenn die Schalteinrichtung in entsprechender Weise wie in den Fig. 1 - 4 gezeigt eingesetzt wird. Die Feder 44' wirkt in ihrer Gesamtheit in dieser Stellung als Druckfeder und drückt das Ventilelement 36 gegen den Ventilsitz 32. Wenn in diesem Zustand das Pumpenaggregat 2 in seinem ersten Betriebszustand, mit einer Drehzahl oberhalb einer ersten Grenzdrehzahl in Betrieb genommen wird, wird so an dem zweiten Eingang 24 in der oben beschriebenen Weise ein Druck erzeugt, welcher auf die Scheibe 56 eine Druckkraft in der Längsrichtung X zu dem Ventilsitz 32 hin erzeugt. Da an dem ersten Eingang 18 ein geringerer Druck herrscht, wird dabei die Scheibe 56 gegen die Druckkraft des zweiten Abschnittes der Feder 44' bewegt, wobei der Faltenbalg 40 gestaucht wird. Die Flüssigkeit im Inneren des Faltenbalges 40 wird dabei durch das Durchgangsloch 42' in das Innere des zweiten Faltenbalges 58 überführt. Durch die Bewegung der Scheibe 56 von dem Verschluss 52 weg wird gleichzeitig der erste Abschnitt der Feder 44' gelängt, so dass dieser Abschnitt als Zugfeder gedehnt wird. Auf diese Weise wird in der Feder in diesem Betriebszustand Energie bzw. Schaltenergie gespeichert.

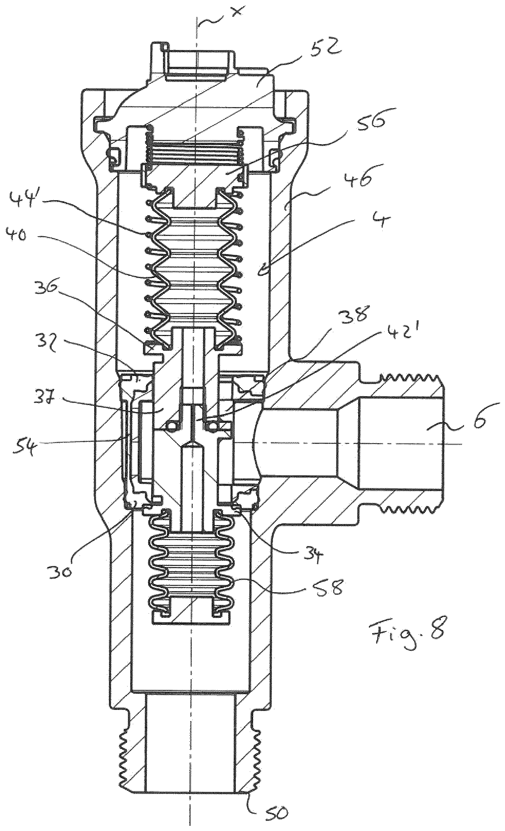

Wenn nun das Pumpenaggregat 2 von dessen Steuereinrichtung 28 in den zweiten Betriebszustand mit geringerer Drehzahl geschaltet wird, nimmt der auf die Scheibe 56 wirkende Druck ab, so dass die an der Scheibe 56 in Axialrichtung X wirkende Kraft nicht mehr im Gleichgewicht mit der Federkraft des gedehnten ersten Abschnittes der Feder 44' ist. Dieser erste Abschnitt der Feder zieht so die Scheibe 56 von dem Ventilsitz 32 weg. Da sich der Federbalg 40 aufgrund der Drosselwirkung des Durchgangsloches 42 nicht gleich wieder befüllt, wird dabei der gestauchte Federbalg gemeinsam mit dem Ventilelement 36 von dem Ventilsitz 32 wegbewegt und das Ventil wird so geöffnet. Gleichzeitig kommt das Ventilelement 34 an dem Ventilsitz 30 in dichte Anlage. Wird nun das Pumpenaggregat 2, bevor sich der Faltenbalg 40 wieder entfaltet, in den ersten Betriebszustand mit höherer Drehzahl versetzt, wirkt nun an dem ersten Anschluss 18 der höhere Druck und erzeugt so auf die Stirnseite des Faltenbalges 58 und somit das Ventilelement 34 eine dem Ventilsitz 30 zugewandte in Axialrichtung X wirkende Kraft. Diese hält das Ventilelement 34 an dem Ventilsitz 30 in dichter Anlage. Es ist somit wieder ein selbsthaltender Zustand des Ventils beim Betrieb des hydraulischen Systems erreicht. Aufgrund der Druckkraft entleert sich nun der zweite Faltenbalg 58 über das Durchgangsloch 42', so dass der erste Faltenbalg 40 wieder expandiert und den in Fig. 8 gezeigten Zustand erreicht. In diesem Zustand ist der zuvor als Zugfeder wirkende erste Abschnitt der Feder 44' gestaucht, so dass dieser Abschnitt nunmehr als Druckfeder wirkt. Wird das Pumpenaggregat aus diesem Zustand heraus abgeschaltet, fällt der Druck auf die Stirnseite des zweiten Faltenbalges 58 weg und der erste Abschnitt der Feder 44' zwischen der Scheibe 56 und dem Verschluss 52 wirkt als Rückstellelement und erzeugt eine solche Druckkraft, dass der Faltenbalg 40 gemeinsam mit dem Ventilelement 36 wieder gegen den Ventilsitz 32 bewegt wird, so dass die in Fig. 6 gezeigte Ausgangslage erreicht wird. Gleichzeitig wird wiederum Flüssigkeit aus dem Faltenbalg 40 in den Faltenbalg 58 verlagert, da sich der zweite Abschnitt der Feder 44'ebenfalls entspannt, das heißt zusammenzieht. Wenn bei dieser Ausführungsform aus dem zweiten Betriebszustand das Pumpenaggregat 2 nicht schnell genug in den ersten Betriebszustand versetzt wird, erfolgt kein Umschalten in die zweite Schaltstellung, da die Ventilelemente 34 und 36 sich bei ihrer Hin- und Her-Bewegung wieder in die erste Schaltstellung zurück bewegen, wenn sich die Faltenbalg 40 entspannt.

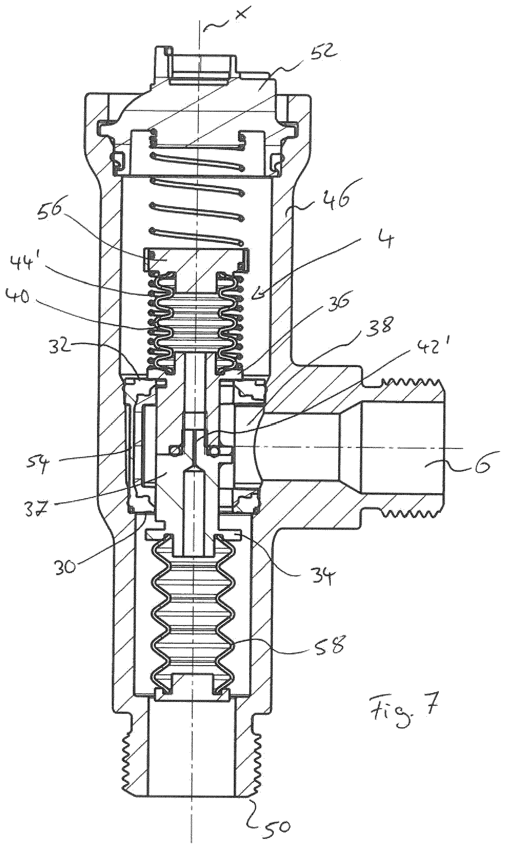

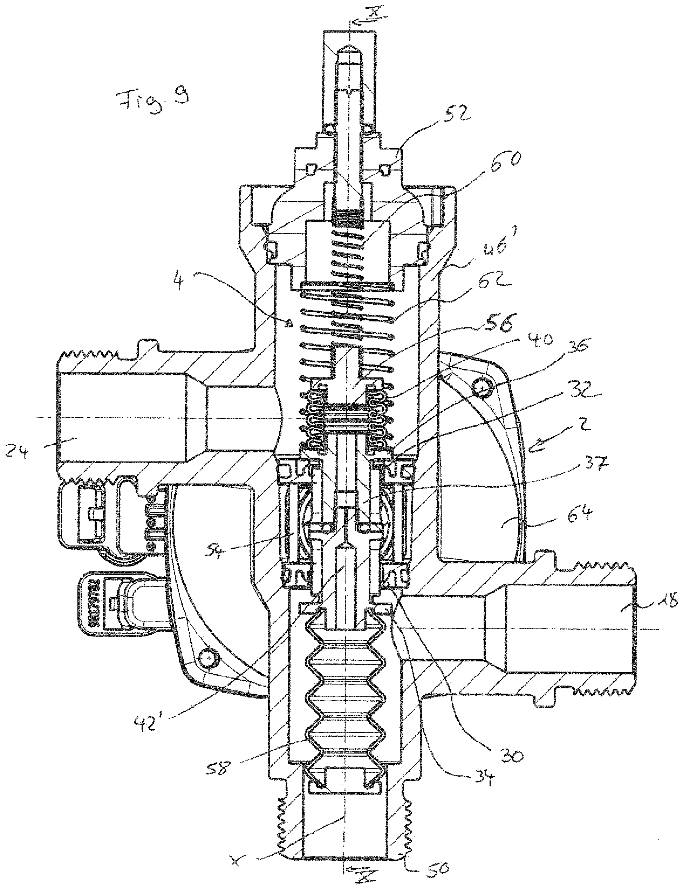

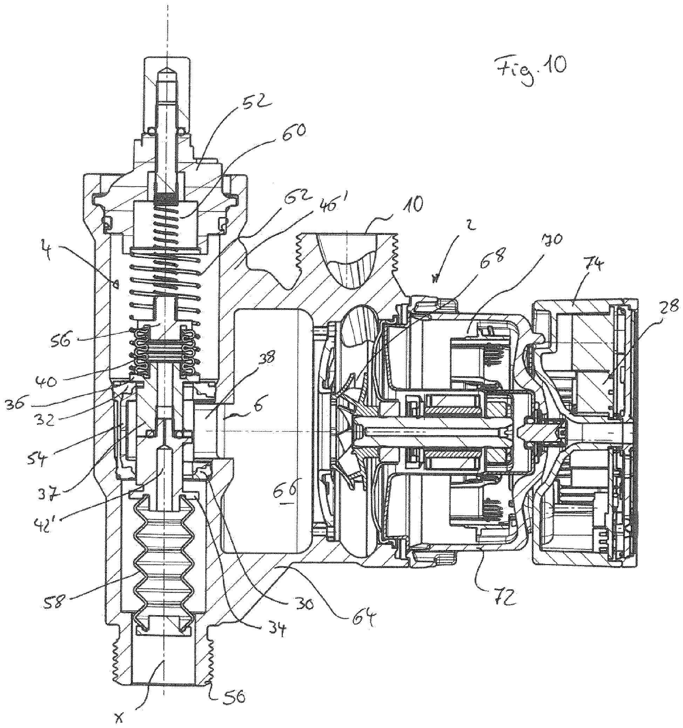

Das Ausführungsbeispiel in Fig. 9 und 10 zeigt eine weitere Ausführungsform der erfindungsgemäßen Schalteirichtung, welche im Wesentlichen der anhand der Fig. 5 bis 8 erläuterten Schalteinrichtung entspricht. Lediglich die Anordnung der Federn ist eine andere. Anstatt einer Feder 44' sind bei dem Ausführungsbeispiel gemäß Fig. 9 und 10 zwei Federn 60 und 62 vorgesehen, eine Zugfeder 60 und eine Druckfeder 62. Die Druckfeder 62 stützt sich direkt zwischen dem Verschluss 52 und dem Ventilelement 36 ab, während die Zugfeder 60 die Scheibe 56 mit dem Verschluss 52 verbindet. Die Fig. 9 und 10 zeigen die erste Schaltstellung, welche Fig. 7 entspricht, das heißt während sich das Pumpenaggregat in dem ersten Betriebszustand befindet und der Faltenbalg 40 durch den Druck am zweiten Eingang 24 gestaucht ist. Die Feder 60 wirkt als Zugfeder, welche, wenn der Faltenbalg 40 gestaucht wird, gedehnt wird und als Energiespeicher fungiert. Wenn das Pumpenaggregat 2 in den zweiten Betriebszustand mit geringerer Drehzahl geschaltet wird und die Haltekraft, welche auf das Ventilelement 36 wirkt, nachlässt, zieht die Zugfeder 60 die Anordnung bestehend aus der Scheibe 56, dem gestauchten Faltenbalg 40 und dem Ventilelement 36 in Richtung zu dem Verschluss 52, das heißt in axialer Richtung X von dem Ventilsitz 32 weg. Dabei wird gleichzeitig das Ventilelement 34 an dem Ventilsitz 30 zur Anlage gebracht. Bei dieser Bewegung wird gleichzeitig die Druckfeder 62, welche als Rückstellelement fungiert, gestaucht. Beim Abschalten der Pumpe bewegt die Druckfeder 62 das Ventilelement 36 wieder in die Ausgangslage zurück, in welcher das Ventilelement 36 an dem Ventilsitz 32 anliegt. Die Zugfeder 60 muss eine größere Kraft aufbringen als die Druckfeder 62, da die Zugfeder 60 die von der Druckfeder 62 erzeugte Federkraft mit überwinden muss, um das Ventil in der beschriebene Weise umzuschalten.

Im Unterschied zu dem anhand der Fig. 5 bis 8 beschriebenen Ausführungsform ist bei dem Ausführungsbeispiel gemäß Fig. 9 und 10 das Gehäuse 46' der Schalteinrichtung 4 integral mit einem Pumpengehäuse 64 des Pumpenaggregates 2 ausgebildet. Hier sind das Pumpengehäuse 64 und das Gehäuse 46' einstückig ausgebildet. Der Ausgang 6 der Schalteinrichtung 4 mündet direkt in den Saugraum 66 des Pumpengehäuses. In dem Pumpengehäuse ist ein Laufrad 68 angeordnet, welches über einen als Spaltrohrmotor ausgebildeten elektrischen Antriebsmotor 70 angetrieben wird. Der Antriebsmotor 70 ist in einem mit dem Pumpengehäuse 64 verbundenen Motor bzw. Statorgehäuse 72 angeordnet. Axialseitig an das Motorgehäuse 72 angesetzt ist ein Klemmenkasten bzw. Elektronikgehäuse 74, in dem die Steuereinrichtung 28 angeordnet ist. So wird eine Baueinheit bestehend aus Pumpenaggregat, Steuereinrichtung 28 und Schalteinrichtung 4 geschaffen, welche als solche auf einfache Weise in ein hydraulisches System wie ein Heizungssystem integriert werden kann. Es ist zu verstehen, dass auch die vorangehend beschriebenen und nachfolgend beschriebenen Beispiele von Schalteinrichtungen in gleicher Weise mit dem Pumpenaggregat 2 zu einer Baueinheit integriert werden können, wie es in den Fig. 9 und 10 gezeigt ist. Zur Vereinfachung werden die weiteren Ausführungsbeispiele anhand eines separaten Gehäuses 46 beschrieben.

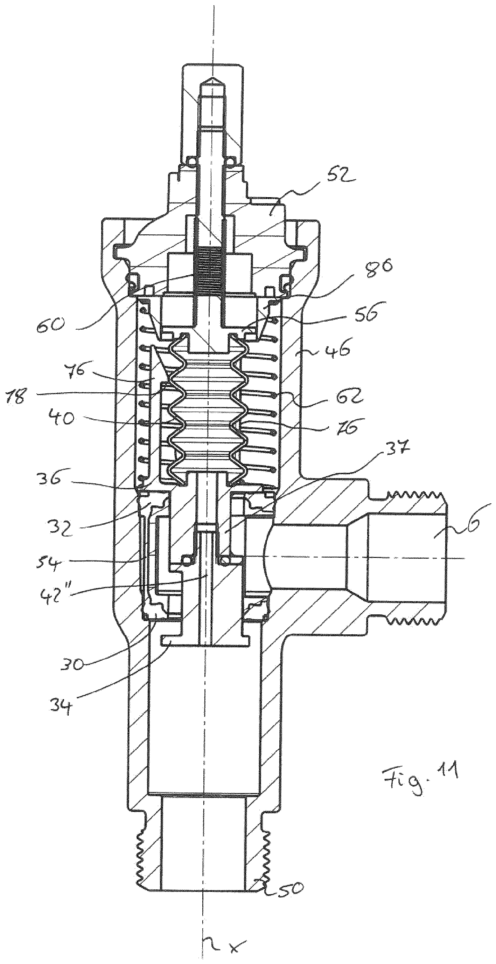

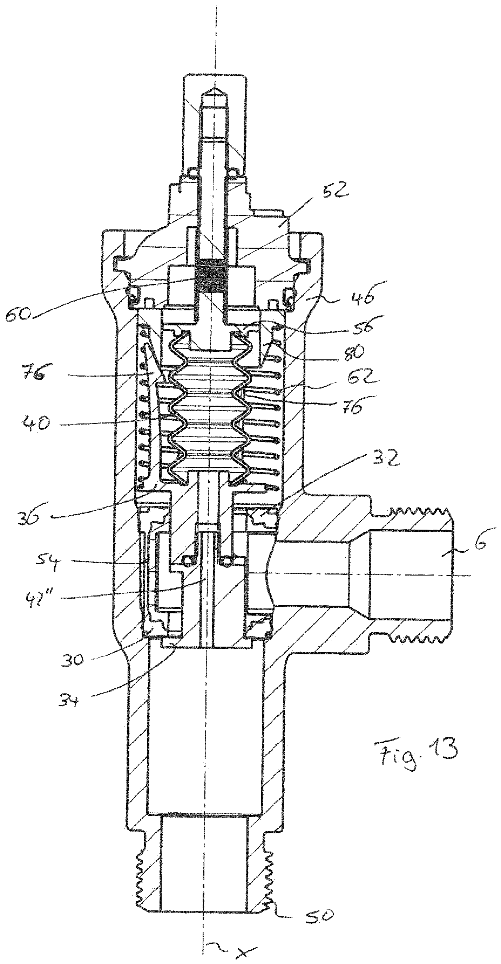

Die in den Fig. 11 bis 13 gezeigte Ausführungsform unterscheidet sich von den vorangehenden Ausführungsformen dadurch, dass die Entkopplung des Ladevorganges von der Bewegung des Ventilelementes 36 und die Kopplung der Bewegung des Ventilelementes 36 mit dem Entladevorganges des Energiespeichers nicht über ein als Drosselstelle wirkendes Durchgangsloch 42, 42' erfolgt, sondern über eine mechanische Verriegelung, wie sie nachfolgend beschrieben wird. Das in den Fig. 11 und 13 zwischen den Ventilelementen 34 und 36 gezeigte Durchgangsloch 42" wirkt im Wesentlichen nicht als Drosselstelle. Wie bei der Ausführungsform gemäß Fig. 9 und 10 greift an der Scheibe 56, welche den Faltenbalg 40 am axialen Ende verschließt, eine Zugfeder 60 an, welche an dem Verschluss 52 befestigt ist. Ferner ist auch bei diesem Ausführungsbeispiel eine Druckfeder 62 vorgesehen, welche sich mit einem Axialende an dem Verschluss 52 abstützt und mit dem entgegengesetzten Axialende an dem Ventilelement 36 anliegt. In der in Fig. 11 gezeigten Ausgangs- bzw. Ruhelage drückt die Druckfeder 62 das Ventilelement 36 gegen den Ventilsitz 32, so dass gleichzeitig das Ventilelement 34 von dem Ventilelement 30 abgehoben ist. In diesem Zustand ist die Zugfeder 60 vollständig zusammengezogen. Wenn nun in diesem Zustand das Pumpenaggregat 2 von der Steuereinrichtung 28 eingeschaltet und in dem ersten Betriebszustand mit hoher Drehzahl betrieben wird, wirkt auf die Scheibe 56 in der vorangehend beschriebenen Weise durch den am zweiten Eingang 24 anliegenden hydraulischen Druck eine Druckkraft, welche die Scheibe 56 in axialer Richtung X zu dem Ventilsitz 32 hin verlagert. Dabei wird der Faltenbalg 40 gestaucht und die Flüssigkeit im Inneren des Faltenbalges 40 durch das Durchgangsloch 32' durch das Ventilelement 34 in das umgebende hydraulische System gedrückt. Das heißt hier ist kein geschlossenes System im Inneren des Faltenbalges 40 vorgesehen. Die Scheibe 56 passiert dabei Rasthaken 76, welche sich parallel zur axialen Richtung X ausgehend von dem Ventilelement 36 erstrecken. Die Rasthaken 76 sind als federnde Zungen ausgebildet und fest mit dem Ventilelement 36 verbunden, vorzugsweise einstückig mit diesem ausgebildet. Die Rasthaken 76 sind an ihrem freien Ende, welches den Verschluss 52 zugewandt ist, jeweils so angeschrägt, dass sie sich beim Passieren der Scheibe 56 radial aufweiten. Nach dem Passieren der Scheibe 56 fedem sie radial nach innen zurück und halten die Scheibe 56 an den Anlageschultern 78.

Wenn nun das Pumpenaggregat in den zweiten Betriebszustand mit geringerer Drehzahl geschaltet wird, verringert sich die Druckkraft auf die Scheibe 56, so dass die von der gespannten Zugfeder 60 erzeugte Federkraft diese Druckkraft überschreitet. So entlädt sich die in der Zugfeder 60 gespeicherte Schaltenergie und die Zugfeder 60 zieht die Scheibe 56 in axialer Richtung zu dem Verschluss 52 hin. Da die Scheibe 56 an den Anlageschultern 78 der Rasthaken 76 anliegt, wird dabei das mit den Rasthaken 76 verbundene Ventilelement 36 mitbewegt und in axialer Richtung X von dem Ventilsitz 32 abgehoben. Über das Verbindungselement 37 wird das andere Ventilelement 34 mitbewegt und zur Anlage an den Ventilsitz 30 gebracht, wie es in Fig. 13 gezeigt ist. Wenn das Ventilelement 36 um ein gewisses Maß in axialer Richtung bewegt ist, tritt zwischen die Rasthaken 76 ein am Außenumfang konisches Ringelement 80, welches an dem Verschluss 52 angeordnet ist und sich von diesem ausgehend in axialer Richtung erstreckt. Das Ringelement 80 tritt so zwischen die Rasthaken 76 ein, da diese radial nach außen gedrückt werden, so dass die Anlageschultern 78 von der Scheibe 56 außer Eingriff treten. In diesem Zustand kann die Zugfeder 60, gegebenenfalls unterstützt durch elastische Rückstellkräfte des Faltenbalges 40 die Scheibe 56 weiter zu dem Verschluss 52 hin bewegen und so den Faltenbalg 40 entspannen, wobei das Innere des Faltbalges 40 über das Durchgangsloch 42'wieder mit Flüssigkeit aus dem hydraulischen System gefüllt wird. Um wieder einen stabilen Betriebszustand zu erhalten, in welchem das von dem Ventilsitz 30 und dem Ventilelement 34 gebildete Ventil geschlossen gehalten wird, wird das Pumpenaggregat 2 rechtzeitig wieder in den ersten Betriebszustand versetzt, bevor die Scheibe 56 von den Rasthaken 76 in der beschriebenen Weise freigegeben wird. In dem ersten Betriebszustand wird wieder ein derart hoher Druck, nun an dem ersten Eingang 18 erzeugt, dass von dem Druck auf das Ventilelement 34 eine Druckkraft erzeugt wird, welche das Ventilelement 34 an den Ventilsitz 30 drückt, gegen die von der Druckfeder 62 erzeugte Druckkraft. Wenn das Pumpenaggregat ausgeschaltet oder wieder in den zweiten Betriebszustand zurückgeschaltet wird, lässt die Druckkraft, welche auf das Ventilelement 34 wirkt, derart nach, dass die von der Druckfeder 62 erzeugte Drucckraft größer wird, so dass dann das Ventilelement 36 und das Ventilelement 34 wieder in die in Fig. 11 gezeigte Ausgangslage zurückbewegt werden. Wenn das Pumpenaggregat 2 nicht in einer vorbestimmten Zeitdauer wieder in den ersten Betriebszustand zurückgeschaltet wird, wird die Rastverbindung zwischen Scheibe 56 und Rasthaken 76 gelöst und die Druckfeder 62 drück das Ventilelement 36 und das Ventilelement 34 wieder zurück in die erste Schaltstellung. Das heißt bei der Hin- und Her- Bewegung der Ventilelemente 34 und 36 kommt es auf den richtigen Einschaltzeitpunkt zum Einschalten des ersten Betriebszustandes an, um die Ventilelemente 34 und 36 in der zweiten Schaltstellung zu halten.

Bei dem Ausführungsbeispiel gemäß Fig. 11 bis 13 wird eine Verzögerung der Entspannung des Faltenbalges 40 im Unterschied zu den vorangehenden Ausführungsbeispielen nicht über eine Drosselstelle sondern über den zurückgelegten Weg und die von den Rasthaken 76 gebildete mechanische Blockade realisiert. Jedoch wird auch bei diesem Ausführungsbeispiel erreicht, dass die Feder 60 in einem Ladevorgang Energie aus dem hydraulischen System aufnehmen kann, ohne dass sich die Ventilelemente 34 und 36 wesentlich verlagern müssen. Diese aufgenommene Energie kann dann in einem zweiten Betriebszustand des Pumpenaggregates zur Verlagerung der Ventilelemente 34 und 36 wieder abgegeben werden.

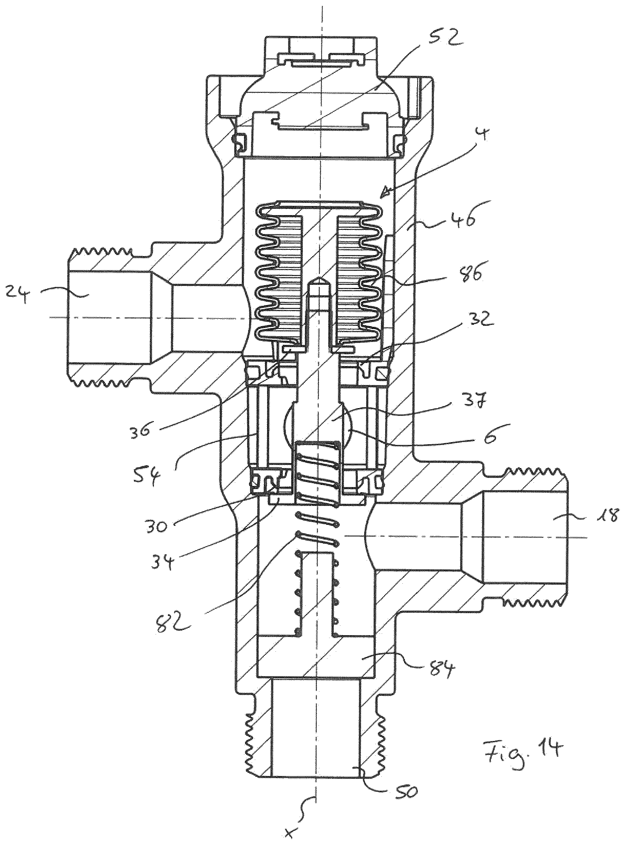

Die nachfolgend beschriebenen Ausführungsbeispiele gemäß der Fig. 14 bis 19 unterscheiden sich von den vorangehend beschriebenen Ausführungsbeispielen dadurch, dass in der Schalteinrichtung 4 kein separater Energiespeicher, insbesondere kein Energiespeicher in Form einer Feder vorgesehen ist, sondern dass diese Schalteinrichtungen Energie ausnutzen, welche in dem hydraulischen System selber gespeichert ist, insbesondere in Form von Trägheitsenergie des zirkulierenden Fluids.

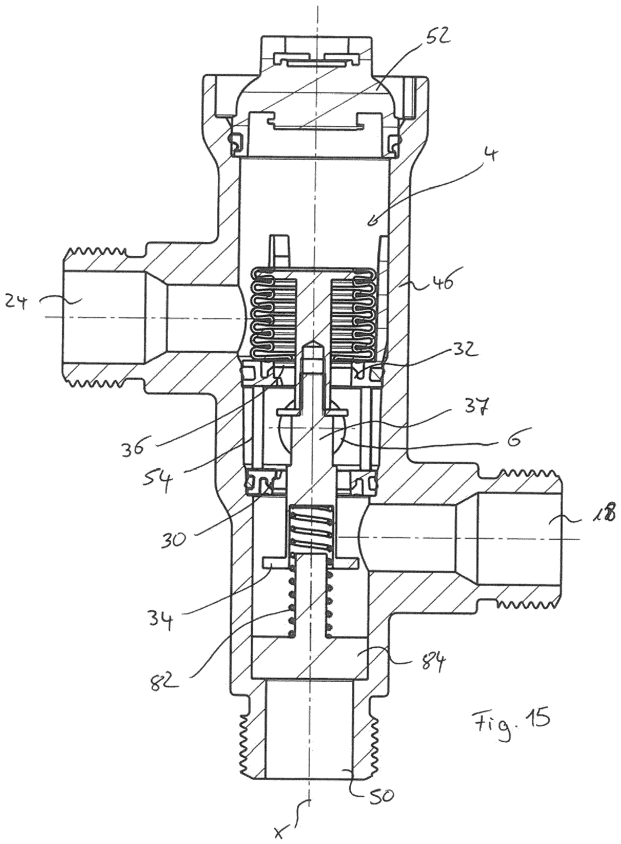

Die Fig. 14 und 15 zeigen ein erstes Ausführungsbeispiel einer Schalteinrichtung 4 für ein solches System. Fig. 14 zeigt die Ausgangslage mit einer ersten Schaltstellung der über das Verbindungselement 37 miteinander verbundenen Ventilelemente 34 und 36. Die Ventilelemente 34 und 36 können auch bei diesem Ausführungsbeispiel wechselseitig mit Ventilsitzen 30 und 32 zur Anlage kommen, welche im Wesentlichen wie vorangehend beschrieben ausgestaltet und angeordnet sind. Auch die Ausgestaltung des Gehäuses 46 mit den Anschlüssen bzw. den Eingängen 18 und 24 sowie dem Ausgang 6 entspricht der vorangehend beschriebenen Gestaltung. Insofern wird auf die vorangehenden Ausführungen verwiesen. Bei diesem Ausführungsbeispiel ist in der Ausgangs- bzw. Ruhelage, welche der ersten Schaltstellung entspricht, das Ventil, welches von dem Ventilsitz 30 und dem Ventilelement 34 gebildet wird, geschlossen, wie es in Fig. 14 gezeigt ist. Die Ruhelage wird durch eine Rückstellfeder 82 gehalten. Die Rückstellfeder 82 ist als Druckfeder ausgebildet und stützt sich zwischen dem Ventilelement 34 und einem Träger 84, welcher an der Montageöffnung 50 anliegt, ab. Der Träger 84 könnte auch einstückig mit dem Gehäuse 46 ausgebildet sein. Wenn in diesem Zustand das Pumpenaggregat 2 in Betrieb genommen und in dem ersten Betriebszustand mit hohem Druck betrieben wird, liegt an dem Eingang 18 der Druck am Knotenpunkt 14 an und drückt gegen das Ventilelement 34, so dass dieses an dem Ventilsitz 30 in Anlage gehalten wird. Somit ist im Betrieb des hydraulischen Systems ein stabiler selbsthaltender Zustand gegeben. Gleichzeitig strömt Fluid von dem zweiten Eingang 34 durch den Spalt zwischen dem Ventilelement 36 und dem Ventilsitz 32 zu dem Ausgang 6. Dabei hat das Fluid bzw. die strömende Flüssigkeit eine gewisse kinetische Energie. Wenn nun das Pumpenaggregat 2 in einen zweiten Betriebszustand mit geringerer Drehzahl geschaltet wird, welche unter einer Grenzdrehzahl liegt, bis zu welcher die Selbsthaltefunktion gegeben ist, nimmt die von dem Druck auf das Ventilelement 34 wirkende Kraft ab, so dass die Selbsthaltefunktion aufgehoben ist. Dabei nimmt der Druck schneller ab als die Strömungsgeschwindigkeit bzw. aus der Strömung herrührende kinetische Energie der Flüssigkeit. Diese Strömungsenergie wirkt weiterhin auf das Ventilelement 36, so dass dieses dann von der Strömung mitgerissen und mit dem Ventilsitz 32 zur Anlage gebracht wird, während gleichzeitig das Ventilelement 34 über das Verbindungselement 37 von dem Ventilsitz 30 abgehoben wird. Das heißt es findet eine Hin- und Herbewegung der Ventilelemente 34 und 36 statt.

Es wird wieder ein selbsthaltender Zustand erreicht, welcher weiter gehalten wird, wenn das Pumpenaggregat dann wieder in seinen ersten Betriebszustand versetzt wird. Erfolgt dies nicht, kann sich die Anordnung der beiden Ventilelemente 34 und 36 insbesondere auch durch Wirkung der Feder 82 wieder zurück in die erste Schaltstellung bewegen. Das heißt auch hier kommt es darauf an, wann das Pumpenaggregat 2 wieder in den ersten Betriebszustand geschaltet wird. So ist auch hierbei ohne zusätzlichen Antrieb ein Umschalten des Strömungsweges zwischen den Eingängen 18 und 24 möglich, wobei zuvor im System gespeicherte Energie für die Bewegung der Ventilelemente 34 und 36 ausgenutzt wird. In diesem System ist zusätzlich ein Balg 86 vorgesehen, welcher das Ventilelement 36 mit dem Verbindungselement 37 verbindet. Der Balg 86 dient als Dämpfer und verhindert, dass das Ventilelement 36, wenn es durch die Strömung gegen den Ventilsitz 32 gedrückt wird, sich durch die Aufprallenergie gleich wieder zurückbewegt. Diese Aufprallenergie kann durch Einfedern des Balges 86 aufgenommen werden. Dieser Zustand ist in Fig. 15 gezeigt. Wenn in diesem Zustand das Pumpenaggregat abgeschaltet wird, wird wiederum der hydraulische Druck aufgehoben, welcher die Haltekraft auf das Ventilelement 36 ausübt, so dass diese Haltekraft von der Druckkraft, welche die Feder 82 ausübt, überwunden wird. Die Feder 82 bewegt dann als Rückstellelement die Ventilelemente 34 und 36 wieder in die in Fig. 14 gezeigte Ausgangslage zurück.

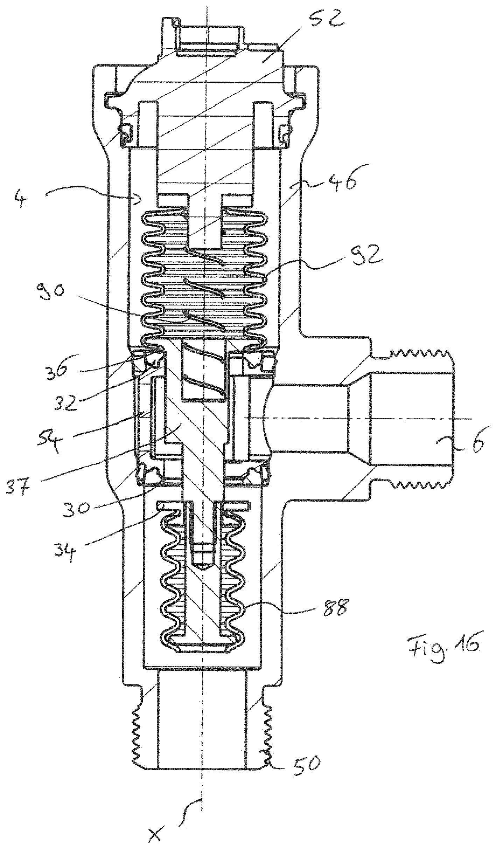

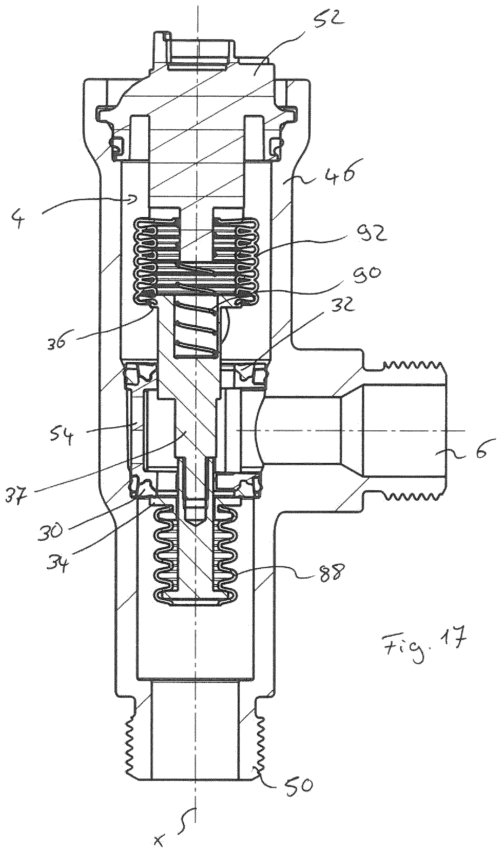

Das Ausführungsbeispiel gemäß Fig. 16 und 17 unterscheidet sich von dem Ausführungsbeispiel gemäß Fig. 14 und 15 zum einen dadurch, dass in der in Fig. 16 gezeigten Ruhelage, welche der ersten Schaltstellung entspricht, das Ventilelement 36 an seinem Dichtsitz 32 anliegt, während das Ventilelement 34 von dem Ventilsitz 30 abgehoben ist. Das heißt in dieser Ausgangslage ist wie in Fig. 1 bis 4 beschrieben der Kreislauf über den Sekundärwärmetauscher 16 geöffnet, während bei dem Ausführungsbeispiel gemäß Fig. 14 und 15 der Strömungsweg durch den Heizkreis in der ersten Schaltstellung geöffnet ist. Ferner ist bei dem Ausführungsbeispiel gemäß Fig. 16 und 17 das Ventilelement 34 über einen Balg 88, welcher dem Balg 86 entspricht, mit dem Verbindungselement 37 verbunden. Auch der Balg 88 dient als Dämpfer, wenn das Ventilelement 34 an den Ventilsitz 30 anschlägt. Ferner ist das Ventilelement 36 über eine Feder 90, welche in ihrer Funktion der Feder 82 in den Fig. 14 und 15 entspricht, an dem Verschluss 52 abgestützt. Die Feder 90 umgebend ist ferner ein weiterer Balg 92 angeordnet, welcher zwischen dem Verschluss 52 und dem Ventilelement 36 angeordnet ist und als weiterer Dämpfer dient. Der Balg 92 weist ebenfalls eine als Drosselstelle wirkende Öffnung auf, welche beispielsweise im Anlagebereich zu dem Ventilelement 36 ausgebildet sein kann. Bei dieser Ausführungsform wird das Ventilelement 36 an dem Ventilsitz 32 durch den am zweiten Eingang 24 herrschenden Druck gehalten, solange das Pumpenaggregat 2 in dem ersten Betriebszustand mit höherer Drehzahl betrieben wird. Wird diese Haltekraft durch Verringerung der Drehzahl des Pumpenaggregates 2 in einem zweiten Betriebszustand verringert, wird der selbsthaltende Zustand aufgehoben und das Ventilelement 34 durch die noch in Fluid vorhandene Strömungsenergie gegen den Ventilsitz 30 gezogen. Das heißt es setzt die Hin- und Her- Bewegung der Schaltelemente in Form der Ventilelemente 34 und 36 ein. Der Anschlag wird dabei über die Bälge 88 und 92 abgedämpft. Durch rechtzeitige Wiederinbetriebnahme des Pumpenaggregates 2 in den ersten Betriebszustand, wirkt dann ein ausreichender Haltedruck auf das Ventilelement 34, so dass wiederrum ein selbsthaltender Zustand in der zweiten Schaltstellung erreicht wird. Andernfalls werden die Ventilelemente 34 und 36 durch die Feder 90 wieder in ihre erste Schaltstellung zurückbewegt.

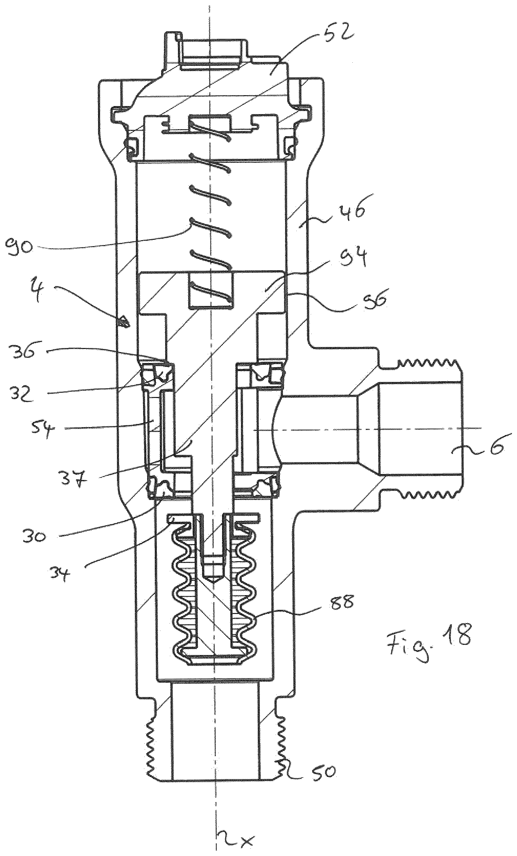

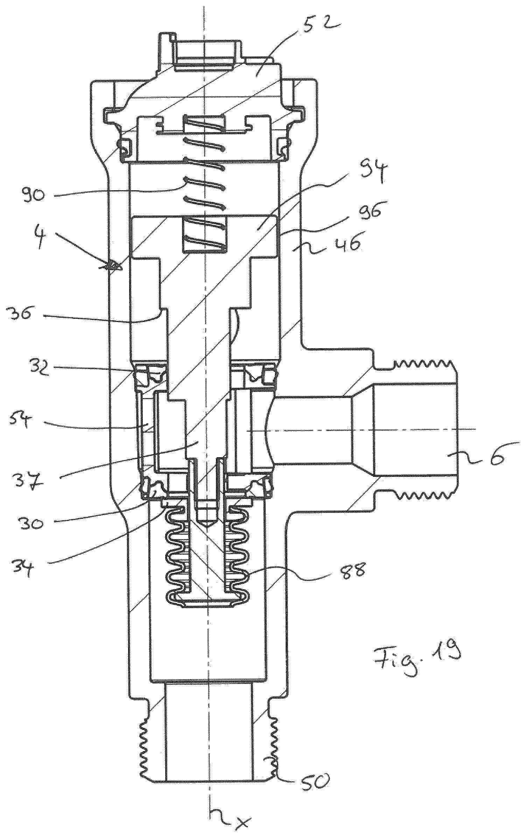

Das Ausführungsbeispiel gemäß Fig. 18 und 19 unterscheidet sich von dem Ausführungsbeispielen gemäß Fig. 16 und 17 dadurch, dass auf den Balg 92 verzichtet wurde und stattdessen an das Ventilelement 36 ein Kolben 94 angeformt ist, welcher in dem Gehäuse 46 in axialer Richtung X beweglich ist. Zwischen der Umfangswandung des Kolbens 94 und der Innenwandung des Gehäuses 46 ist ein Ringspalt 96 ausgebildet, welcher als Drosselstelle wirkt. Diese Drosselstelle führt zu einer Dämpfung bei der Bewegung des Kolbens 94, da die Flüssigkeit durch den Ringspalt 96 von der einen Seite zu der anderen Seite des Kolbens 94 strömen muss. So übernimmt der Kolben 94 mit dem Ringspalt 96 die Funktion des zuvor beschriebenen Balges 92. Im Übrigen ist die Funktionsweise der Schalteinrichtung gemäß Fig. 18 und 19 dieselbe wie anhand von Fig. 16 und 17 beschrieben.

Das Pumpenaggregat 2 ist vorzugsweise als Pumpenaggregat mit einem über einen Frequenzumrichter angesteuerten elektrischen Antriebsmotor ausgebildet. Die Verwendung einer solchen Ansteuerung hat den Vorteil, dass das Pumpenaggregat 2 beim Verringern der Drehzahl zusätzlich durch gegenläufige magnetische Felder gebremst werden kann. Somit wird eine schnellere Drehzahlverringerung erreicht. Die verwendeten Bälge bzw. Faltenbälge 40, 58, 86, 88 und 92 sind vorzugsweise aus Gummi oder einem geeigneten Elastomer gefertigt.

### Bezugszeichenliste

- 2: Pumpenaggregat
- 4: Schalteinrichtung
- 6: Ausgang
- 8: saugseitiger Anschluss
- 10: druckseitiger Anschluss
- 12: Primärwärmetauscher
- 14: Knotenpunkt
- 16: Sekundärwärmetaucher
- 18: erster Eingang
- 20: Heizkörper
- 22: Regulierventil
- 24: zweiter Eingang
- 26: Bypass
- 28: Steuereinrichtung
- 30, 32: Ventilsitze
- 34,36: Ventilelemente
- 37: Verbindungselement
- 38: Anschlussraum
- 40: Faltenbalg
- 42, 42', 42": Durchgangsloch
- 44, 44': Feder
- 46, 46': Gehäuse
- 48: Einsetzöffnung
- 50: Montageöffnung
- 52: Verschluss
- 54: Trägerelement
- 56: Scheibe
- 58: zweiter Faltenbalg
- 60: Zugfeder
- 62: Druckfeder
- 64: Pumpengehäuse
- 66: Saugraum
- 68: Laufrad
- 70: Antriebsmotor
- 72: Motorgehäuse
- 74: Elektronikgehäuse
- 76: Rasthaken
- 78: Anlageschultern
- 80: Ringelement
- 82: Rückstellfeder
- 84: Träger
- 86, 88: Bälge
- 90: Feder
- 92: Balg
- 94: Kolben
- 96: Drosselstelle
- X: Längsachse

## Patentansprüche

1. Verfahren zum Umschalten einer Schalteinrichtung (4) zwischen zwei Schaltstellungen in einem hydraulischen System, wobei das hydraulische System neben der Schalteinrichtung (4) ein Pumpenaggregat (2) aufweist,
wobei
das Pumpenaggregat (2) zumindest zwei verschiedene Betriebszustände einnehmen kann und ein Umschalten der Schalteinrichtung (4) von dem Pumpenaggregat (2) über das hydraulische System veranlasst wird, **dadurch gekennzeichnet, dass** die Schaltstellungen der Schalteinrichtung (4) abhängig von einer Verweildauer des Pumpenaggregates (2) in zumindest einem der beiden Betriebszustände erreicht werden.

2. Verfahren nach Anspruch 1, **dadurch gekennzeichnet, dass** bei Betrieb des Pumpenaggregates (2) in einem ersten Betriebszustand die Schalteinrichtung in jeder der beiden Schaltstellungen selbsthaltend ist,
zum Umschalten zwischen den Schaltstellungen das Pumpenaggregat (2) aus dem ersten Betriebszustand in einen zweiten Betriebszustand versetzt wird,
die Schalteinrichtung (4), wenn sich das Pumpenaggregat (2) in dem zweiten Betriebszustand befindet, zwischen den beiden Schaltstellungen hin- und her schaltet, und
zum Halten einer gewünschten Schaltstellung das Pumpenaggregat (2) beim Erreichen der gewünschten Schaltstellung wieder in den ersten Betriebszustand versetzt wird.

3. Verfahren nach Anspruch 1 oder 2, **dadurch gekennzeichnet, dass** in dem ersten Betriebszustand das Pumpenaggregat (2) mit einer höheren Drehzahl betrieben wird als in dem zweiten Betriebszustand, wobei vorzugsweise in dem ersten Betriebszustand die Drehzahl größer als eine vorbestimmte Grenzdrehzahl ist und in dem zweiten Betriebszustand die Drehzahl kleiner oder gleich der Grenzdrehzahl ist oder das Pumpenaggregat (2) in dem zweiten Betriebszustand stillsteht.

4. Verfahren nach einem der Ansprüche 1 bis 3, **dadurch gekennzeichnet, dass** die Schalteinrichtung (4) in dem ersten Betriebszustand durch einen von dem Pumpenaggregat (2) erzeugten hydraulischen Druck in der jeweiligen Schaltstellung gehalten wird.

5. Verfahren nach einem der Ansprüche 1 bis 4, **dadurch gekennzeichnet, dass** bei Betrieb des Pumpenaggregates (2) in dem zweiten Betriebszustand und/oder bei Stillstand des Pumpenaggregates (2) die Schalteinrichtung (4) in eine definierte Ausgangslage bewegt und dort gehalten wird.

6. Verfahren nach einem der Ansprüche 2 bis 5, **dadurch gekennzeichnet, dass** bei dem Hin- und Herschalten der Schalteinrichtung von dieser zumindest jede der beiden Schaltstellungen einmal eingenommen wird.

7. Verfahren nach einem der Ansprüche 2 bis 6, **dadurch gekennzeichnet, dass** das Hin- und Her-Schalten der Schalteinrichtung mithilfe von Energie bewirkt wird, welche zuvor bei Betrieb des Pumpenaggregates (2) in dem ersten Betriebszustand in zumindest einem Energiespeicher und/oder in dem hydraulischen System gespeichert worden ist oder von dem Pumpenaggregat (2) in dem zweiten Betriebszustand an das hydraulische System abgegeben wird.

8. Verfahren nach einem der Ansprüche 2 bis 7, **dadurch gekennzeichnet, dass** eine Bewegung zwischen den beiden Schaltstellungen der Schalteinrichtung (4) bei dem Hin- und Her-Schalten über zumindest ein Dämpfungselement und/oder eine zurückzulegende Weglänge verzögert wird.

9. Verfahren nach einem der vorangehenden Ansprüche, **dadurch gekennzeichnet, dass** die Schalteinrichtung (4) eine Umschalteinrichtung ist, welche zwischen zwei Strömungswegen für eine von dem Pumpenaggregat (2) erzeugte Strömung umschaltet, wobei vorzugsweise ein von dem Pumpenaggregat (2) in dem gerade verschlossenen Strömungsweg erzeugter hydraulischer Druck dazu genutzt wird, die Schalteinrichtung (4) in ihrer eingenommen Schaltstellung zu halten, solange das Pumpenaggregat (2) in seinem ersten Betriebszustand betrieben wird.

10. Hydraulisches System mit zumindest einem Pumpenaggregat (2) und einer Schalteinrichtung (4), welche zwei Schaltstellungen aufweist,
wobei
das Pumpenaggregat (2) zumindest zwei verschiedene Betriebszustände aufweist, die Schalteinrichtung (4) mit dem Pumpenaggregat (2) über eine hydraulische Verbindung verbunden ist **dadurch gekennzeichnet, dass** die Schalteinrichtung (4) derart ausgebildet ist, dass die Schaltstellungen der Schalteinrichtung (4) abhängig von einer Verweildauer des Pumpenaggregates (2) in zumindest einem der beiden Betriebszustände erreicht werden.

11. Hydraulisches System nach Anspruch 10, **dadurch gekennzeichnet, dass**
die Schalteinrichtung (4) derart ausgebildet ist, dass bei Betrieb des Pumpenaggregates (2) in einem ersten Betriebszustand die Schalteinrichtung (4) in jeder der beiden Schaltstellungen selbsthaltend ist, und
dass das Pumpenaggregat (2) sowie die Schalteinrichtung (4) derart ausgestaltet sind, dass sie zum Umschalten zwischen den Schaltstellungen in einer Weise zusammenwirken, dass in einem zweiten Betriebszustand des Pumpenaggregates (2) die Schalteinrichtung (4) zwischen den beiden Schaltstellungen hin und her schaltet und zum Halten einer gewünschten Schaltstellung das Pumpenaggregat beim Erreichen der gewünschten Schaltstellung in den ersten Betriebszustand versetzt wird.

12. Hydraulisches System nach Anspruch 10 oder 11, **dadurch gekennzeichnet, dass** das Pumpenaggregat derart ausgebildet ist, dass in dem ersten Betriebszustand das Pumpenaggregat (2) mit einer Drehzahl oberhalb einer Grenzdrehzahl betrieben wird und dass in dem zweiten Betriebszustand das Pumpenaggregat (2) mit einer Drehzahl kleiner oder gleich der Grenzdrehzahl betrieben wird oder stillsteht.

13. Hydraulisches System nach einem der Ansprüche 10 bis 12, **dadurch gekennzeichnet, dass** die Schalteinrichtung 84) mit einem Antriebselement versehen ist, welches in dem zweiten Betriebszustand des Pumpenaggregates (2) die Schalteinrichtung (4) zwischen den beiden Schaltstellungen hin und her schaltet.

14. Hydraulisches System nach Anspruch 13, **dadurch gekennzeichnet, dass** das Antriebselement derart ausgestaltet ist, dass es durch eine von einer hydraulischen Strömung verursachten Kraft, insbesondere durch eine hydraulische Trägheitskraft in dem hydraulischen System bewegbar ist und/oder einen Energiespeicher aufweist, welcher derart ausgestaltet ist, dass er bei Betrieb des Pumpenaggregates (2) in dem ersten Betriebszustand Energie aus dem hydraulischen System speichert und bei Betrieb des Pumpenaggregates (2) in dem zweiten Betriebszustand Energie abgibt, mittels welcher die Schalteinrichtung (4) bewegt wird.

15. Hydraulisches System nach einem der Ansprüche 10 bis 14, **dadurch gekennzeichnet, dass** die Schalteinrichtung (4) derart ausgestaltet ist, dass sie bei Betrieb des Pumpenaggregates (2) in dem zweiten Betriebszustand zumindest einmal in jede der beiden Schaltstellungen schaltet.

16. Hydraulisches System nach einem der Ansprüche 10 bis 15, **dadurch gekennzeichnet, dass** die Schalteinrichtung (4) ein Rückstellelement aufweist, welches derart ausgebildet ist, dass das Hin- und Her-Schalten der Schalteinrichtung (4) in einer definierten Ausgangslage der Schalteinrichtung (4) endet und die Schalteinrichtung (4) bei Stillstand des Pumpenaggregates (2) in dieser definierten Ausgangslage hält.

17. Hydraulisches System nach einem der Ansprüche 10 bis 16, **gekennzeichnet durch** eine Steuereinrichtung (4), welche derart ausgebildet ist, dass sie auf Grundlage eines Schaltbefehls zum Umschalten der Schalteinrichtung (4) aus der ersten in die zweite Schaltstellung das Pumpenaggregat (2) zunächst aus dem ersten Betriebszustand in den zweiten Betriebszustand versetzt und nach einer bestimmten auf die Zeitdauer der Hin- und Her-Bewegung der Schalteinrichtung (4) derart abgestimmten Zeitspanne das Pumpenaggregat (2) wieder in den ersten Betriebszustand versetzt, dass sich die Schalteinrichtung (4) in der zweiten Schaltstellung befindet, wenn das Pumpenaggregat (2) wieder in den ersten Betriebszustand versetzt wird.

18. Hydraulisches System nach einem der vorangehenden Ansprüche, **dadurch gekennzeichnet, dass** das Pumpenaggregat (2) einen Drehzahlsteller zur Veränderung der Drehzahl des Pumpenaggregates (2) aufweist, wobei der Drehzahlsteller eine Bremsschaltung aufweist, welche das Pumpenaggregat bei einer Verringerung der Drehzahl aktiv abbremst.

## Claims

1. A method for switching a switching device (4) between two switch positions in a hydraulic system, wherein the hydraulic system apart from the switching device (4) comprises a pump assembly (2),
wherein
the pump assembly (2) can assume at least two different operating conditions and a switching-over of the switching device (4) is initiated by the pump assembly (2) via the hydraulic system, **characterised in that** the switch positions of the switching device (4) are reached in a manner depending on a stay duration of the pump assembly (2) in at least one of the two operating conditions.

2. A method according to claim 1, **characterised in that** the switching device is self-holding in each of the two switch positions, on operation of the pump assembly (2) in a first operating condition,
the pump assembly (2) is brought out of the first operating condition into a second operating condition for switching over between the switch positions, the switching device (4) is switched to and fro between the two switch positions, when the pump assembly (2) is situated in the second operating condition, and
the pump assembly (2) is brought again into the first operating condition on reaching a desired switch position, for holding the desired switch position.

3. A method according to claim 1 or 2, **characterised in that** the pump assembly (2) is operated at a higher speed in a first operating condition than in the second operating condition, wherein preferably the speed in the first operating condition is greater than a predefined limit speed and in the second operating condition the speed is smaller or equal to the limit speed, or the pump assembly (2) is at a standstill in the second operating condition.

4. A method according to one of the claims 1 to 3, **characterised in that** the switching device (4) in the first operating condition is held in the respective switch position by a hydraulic force produced by the pump assembly (2).

5. A method according to one of the claim 1 to 4, **characterised in that** the switching device (4) is moved into a defined starting position and held there, on operation of the pump assembly (2) in the second operating condition and/or with a standstill of the pump assembly (2).

6. A method according to one of the claims 2 to 5, **characterised in that** each of the two switch positions is assumed at least once by the switching device, with the to and fro switching of the switching device.

7. A method according to one of the claims 2 to 6, **characterised in that** the to and fro switching of the switching device is effected with the help of energy which was previously stored in at least one energy store and/or in the hydraulic system, on operation of the pump assembly (2) in the first operating condition, or is released to the hydraulic system by the pump assembly (2) in the second operating condition.

8. A method according to one of the claims 2 to 7, **characterised in that** a movement between the two switch positions of the switching device (4) on switching to and fro is delayed via at least one damping element and/or a path distance to be covered.

9. A method according to one of the preceding claims, **characterised in that** the switching device (4) is a switch-over device which switches between two flow paths for a flow produced by the pump assembly (2), wherein preferably a hydraulic pressure which is produced by the pump assembly (2) in the just closed flow path is utilised to hold the switching device (4) in its assumed switch position, as long as the pump assembly (2) is operated in its first operating condition.

10. A hydraulic system with at least one pump assembly (2) and with a switching device (4) which comprises two switch positions,
wherein
the pump assembly (2) has at least two different operating conditions, the switching device (4) is connected to the pump assembly (2) via a hydraulic connection **characterised in that** the switching device (4) is designed in a manner such that the switch positions of the switching device (4) are reached in a manner depending on the stay duration of the pump assembly (2) in at least one of the two operating conditions.

11. A hydraulic system according to claim 10, **characterised in that** the switching device (4) is designed in a manner such that the switching device (4) is self-holding in each of the two switch positions on operation of the pump assembly (2) in a first operating condition, and
that the pump assembly (2) as well as the switching device (4) are designed in a manner such that for switching over between the switch positions, they interact in a manner such that in a second operating condition of the pump assembly (2), the switching device (4) switches to and fro between the two switch positions, and on reaching a desired switch position, the pump assembly is brought into the first operating condition, for holding the desired switch position.

12. A hydraulic system according to claim 10 or 11, **characterised in that** the pump assembly is designed in a manner such that the pump assembly (2) is operated at a speed above a limit speed in the first operating condition, and that the pump assembly (2) is operated at a speed which is smaller or equal to the limit speed or is at a standstill, in the second operating condition.

13. A hydraulic system according to one of the claims 10 to 12, **characterised in that** the switching device (4) is provided with a drive element which in the second operating condition of the pump assembly (2) switches the switching device (4) to and fro between the two switch positions.

14. A hydraulic system according to claim 13, **characterised in that** drive element is designed in a manner such that it is movable by a force which is caused by a hydraulic flow, in particular by a hydraulic inertia force in the hydraulic system and/or comprises an energy store which is designed in a manner such that it stores energy from the hydraulic system on operation of the pump assembly (2) in the first operating condition, and releases energy on operation of the pump assembly (2) in the second operating condition, by way of which energy the switching device (4) is moved.

15. A hydraulic system according to one of the claims 10 to 14, **characterised in that** the switching device (4) is designed in a manner such that on operation of the pump assembly (2) in the second operating condition, it switches at least once into each of the two switch positions.

16. A hydraulic system according to one of the claims 10 to 15, **characterised in that** the switching device (4) comprises a restoring element which is designed in a manner such the switching of the switching device (4) to and fro ends in a defined starting position of the switching device (4) and holds the switching device (4) in this defined starting position on standstill of the pump assembly (2).

17. A hydraulic system according to one of the claims 10 to 16, **characterised by** a control device (4) which is designed such that it firstly brings the pump assembly (2) out of the first operating condition into the second operating condition on the basis of a switching command for switching over the switching device (4) from the first into the second switch position, and brings the pump assembly (2) back again into the first operating condition after a defined time interval which is matched to the time duration of the to and fro movement of the switching device (4) in a manner such that the switching device (4) is situated in the second switch position when the pump assembly (2) is brought again into the first operating condition.

18. A hydraulic system according to one of the preceding claims, **characterised in that** the pump assembly (2) comprises a speed controller for changing the speed of the pump assembly (2), wherein the speed controller comprises a braking circuit which actively brakes the pump assembly given a reduction of the speed.

## Revendications

1. Procédé pour commuter un dispositif de commutation (4) entre deux positions de commutation dans un système hydraulique, le système hydraulique comprenant, outre le dispositif de commutation (4), un groupe motopompe (2), le groupe motopompe (2) pouvant prendre au moins deux états de fonctionnement différents et la commutation du dispositif de commutation (4) étant initiée par le groupe motopompe (2) via le système hydraulique,
**caractérisé en ce que** les positions de commutation du dispositif de commutation (4) sont atteints en fonction d'un lapse de temps que le groupe motopompe a passé dans au moins un des deux états de fonctionnement.

2. Procédé selon la revendication 1, **caractérisé en ce que** lors d'un fonctionnement du groupe motopompe (2) dans un premier état de fonctionnement, le dispositif de commutation se maintient lui-même dans chacune des deux positions de commutation,
pour commuter entre les positions de commutation, le groupe motopompe (2) est rendu du premier état de fonctionnement dans un deuxième état de fonctionnement,
le dispositif de commutation (4) commute dans un sens comme dans l'autre entre les deux positions de commutation, lorsque le groupe motopompe (2) est dans le deuxième état de fonctionnement, et pour maintenir une position de commutation souhaitée, le groupe motopompe (2) est mis dans le premier état de fonctionnement, lorsque la position de commutation souhaitée est atteinte.

3. Procédé selon la revendication 1 ou 2, **caractérisé en ce que**, dans le premier état de fonctionnement, le groupe motopompe (2) est fait fonctionner avec une vitesse de rotation plus élevée que dans le deuxième état de fonctionnement, de préférence, dans le premier état de fonctionnement, la vitesse de rotation étant supérieure à une vitesse de rotation limite prédéterminée et dans le deuxième état de fonctionnement, la vitesse de rotation étant inférieure ou égale à la vitesse de rotation limite ou, dans le deuxième état de fonctionnement, le groupe motopompe (2) est à l'arrêt.

4. Procédé selon l'une des revendications 1 à 3, **caractérisé en ce que**, dans le premier état de fonctionnement, le dispositif de commutation (4) est maintenu dans la position de commutation respective par une pression hydraulique engendrée par le groupe motopompe (2).

5. Procédé selon l'une des revendications 1 à 4, **caractérisé en ce que**, lors du fonctionnement du groupe motopompe (2) dans le deuxième état de fonctionnement et/ou lors de l'arrêt du groupe motopompe (2), le dispositif de commutation (4) est placé dans une position de départ définie et y est maintenu.

6. Procédé selon l'une des revendications 2 à 5, **caractérisé en ce que**, lors de la commutation du dispositif de commutation dans les deux sens, celui-ci se rend une fois dans au moins chacune des deux positions.

7. Procédé selon l'une des revendications 2 à 6, **caractérisé en ce que** la commutation du dispositif de commutation dans les deux sens est initiée à l'aide d'une énergie qui a été préalablement emmagasinée, lors du fonctionnement du groupe motopompe (2) dans le premier état de fonctionnement, dans au moins un accumulateur d'énergie et/ou dans le système hydraulique ou qui a été fourni au système hydraulique par le groupe motopompe (2) dans le deuxième état de fonctionnement.

8. Procédé selon l'une des revendications 2 à 7, **caractérisé en ce qu'**un mouvement entre les deux positions de commutation du dispositif de commutation (4), lors de la commutation dans les deux sens, est retardé par au moins un élément d'atténuation et/ou un trajet à parcourir.

9. Procédé selon l'une des revendications précédentes, **caractérisé en ce que** le dispositif de commutation (4) est un dispositif de commutation qui commute entre deux chemins de flux pour un flux engendré par le groupe motopompe (2), une pression hydraulique engendrée par le groupe motopompe (2) dans le chemin de flux actuellement fermé étant avantageusement utilisée pour maintenir le dispositif de commutation (4) dans sa position de commutation prise, le temps que le groupe motopompe (2) est fait fonctionner dans son premier état de fonctionnement.

10. Système hydraulique avec au moins un groupe motopompe (2) et un dispositif de commutation (4) qui présente deux positions de commutation, le groupe motopompe (2) présentant au moins deux états de fonctionnement différents, le dispositif de commutation (4) étant raccordé au groupe motopompe (2) par une liaison hydraulique, **caractérisé en ce que** le dispositif de commutation (4) est configuré de façon que les positions de commutation du dispositif de commutation (4) soient atteints en fonction d'un lapse de temps que le groupe motopompe a passé dans au moins un des deux états de fonctionnement.

11. Système hydraulique selon la revendication 10, **caractérisé en ce que** le dispositif de commutation (4) est configuré de façon que lors d'un fonctionnement du groupe motopompe (2) dans un premier état de fonctionnement, le dispositif de commutation (4) se maintient lui-même dans chacune des deux positions de commutation, et
**que** le groupe motopompe (2) et le dispositif de commutation (4) sont configurés de façon que, pour commuter entre les positions de commutation, ils coopèrent d'une manière telle que, dans un deuxième état de fonctionnement du groupe motopompe (2), le dispositif de commutation (4) commute dans un sens comme dans l'autre entre les deux positions de commutation, et que, pour maintenir une position de commutation souhaitée, le groupe motopompe est mis dans le premier état de fonctionnement, lorsque la position de commutation souhaitée est atteinte.

12. Système hydraulique selon la revendication 10 ou 11, **caractérisé en ce que** le groupe motopompe est configuré de façon que, dans le premier état de fonctionnement, le groupe motopompe (2) soit fait fonctionner avec une vitesse de rotation supérieure à une vitesse de rotation limite et que, dans le deuxième état de fonctionnement, le groupe motopompe (2) soit fait fonctionner avec une vitesse de rotation inférieure ou égale à la vitesse de rotation limite ou soit à l'arrêt.

13. Système hydraulique selon l'une des revendications 10 à 12, **caractérisé en ce que** le dispositif de commutation (4) est pourvu d'un élément d'entraînement qui, dans le deuxième état de fonctionnement du groupe motopompe (2), commute le dispositif de commutation (4) dans un sens et dans l'autre entre les deux positions de commutation.

14. Système hydraulique selon la revendication 13, **caractérisé en ce que** l'élément d'entraînement est configuré de façon qu'il soit déplaçable par une force engendrée par un flux hydraulique, notamment par une force d'inertie hydraulique dans le système hydraulique, et/ou que, lors d'un fonctionnement du groupe motopompe (2) dans le premier état de fonctionnement, il accumule de l'énergie provenant du système hydraulique et que, lors d'un fonctionnement du groupe motopompe (2) dans le deuxième état de fonctionnement, il met à disposition de l'énergie à l'aide de laquelle le dispositif de commutation (4) est déplacé.

15. Système hydraulique selon l'une des revendications 10 à 14, **caractérisé en ce que** le dispositif de commutation (4) est configuré de façon que, lors d'un fonctionnement du groupe motopompe (2) dans le deuxième état de fonctionnement, il commute au moins une fois dans chacune des deux positions de commutation.

16. Système hydraulique selon l'une des revendications 10 à 15, **caractérisé en ce que** le dispositif de commutation (4) comprend un élément de rappel qui est configuré de façon que la commutation du dispositif de commutation (4) dans un sens et dans l'autre se termine dans une position de départ défini du dispositif de commutation et que, lorsque le groupe motopompe (2) s'arrête, le dispositif de commutation (4) s'arrête dans cette position de départ défini.

17. Système hydraulique selon l'une des revendications 10 à 16, **caractérisé par** un dispositif de commande (4) qui est configuré de façon que, à la suite d'une commande de commutation pour commuter le dispositif de commutation (4) de la première position de commutation à la deuxième position de commutation, il met le groupe motopompe (2) d'abord du premier état de fonctionnement au deuxième état de fonctionnement et qu'il remet le groups motopompe (2) ensuite au premier état de fonctionnement après un lapse de temps adapté de façon telle à la durée du mouvement dans un sens et dans l'autre du dispositif de commutation (4) que le dispositif de commutation (4) se trouve dans la deuxième position de commutation, lorsque le groupe motopompe (2) est remis dans le premier état de fonctionnement.

18. Système hydraulique selon l'une des revendications précédentes, **caractérisé en ce que** le groupe motopompe (2) comprend un régulateur de vitesse de rotation pour varier la vitesse de rotation du groupe motopompe (2), le régulateur de vitesse de rotation comprenant un dispositif de freinage qui freine le groupe motopompe activement lors d'une diminution de la vitesse de rotation.
